# EUROPEAN PATENT APPLICATION

(11) **EP 4 400 553 A1**
(43) Date of publication of application: **17.07.2024**
(21) Application number: 22883612.8
(22) Date of filing: 19.10.2022
(51) Int. Cl.: C09K 3/18

(54) **WATER REPELLENT COMPOSITION**

(30) Priority: 20.10.2021 CN 202111218857
(71) Applicant: DAIKIN INDUSTRIES, LTD., Osaka-Shi, Osaka 530-0001 (JP)
(72) Inventor: NAKAMURA, Keisuke, Osaka-shi, Osaka 530-8323 (JP); FUKUMOTO, Kanako, Osaka-shi, Osaka 530-8323 (JP); ENOMOTO, Takashi, Shanghai 201108 (CN); ZHOU, Bin, Shanghai 201108 (CN); CHEN, Tao, Shanghai 201108 (CN)
(74) Representative: Hoffmann Eitle
(86) International application number: PCT/JP2022/038993
(87) International publication number: WO 2023/068308

(57) **Abstract**

Provided is a water repellent composition which comprises: a water-repellent resin based on a hydrocarbon having a C5-C40 hydrocarbon group; and hydrophilic particles. The water repellent composition can impart both satisfactory water repellency and satisfactory antislip properties to textile products, and has storage stability.

## Description

### Technical Field

The present disclosure relates to a water-repellent composition.

### Background Art

There are known hydrocarbon group-containing polymers that can be used as water-repellent agents to impart water-repellency to a substrate (particularly a textile product). For example, Patent Literature 1 discloses that high water-repellency and washing durability can be provided by using a water-repellent fabric composed of fibers having a coating film on the surface of the fibers, wherein the coating film is composed of hydrophilic particles having an average primary particle size of 40 nm to 600 nm, and a water-repellent agent and a binder resin that cover the hydrophilic particles.

### Citation List

### Patent Literature

Patent Literature 1: JP 2021-42488 A

### Summary of Invention

### Technical Problem

When the conventional water-repellent textile products are used, sliding (slip) of seams can result in reducing reliability of the textile products, which is thereby problematic. Moreover, combining a hydrophobic repellent component with a hydrophilic particle may generate precipitate, causing a problem of poor storage stability as well.

An object of the present disclosure is to provide a water-repellent composition capable of imparting both favorable water-repellency and favorable slip resistance to a textile product and having storage stability.

### Solution to Problem

Preferred aspects of the present disclosure are as follows:
[Item 1] A water-repellent composition comprising: a hydrocarbon-based water-repellent resin having a hydrocarbon group having 5 to 40 carbon atoms; and a hydrophilic particle.
[Item 2] The water-repellent composition according to the item 1, wherein a water dispersion prepared by dispersing the hydrophilic particle in water at a concentration of 10 g/l and adjusting a pH of the water dispersion to 7 has a turbidity of 20 ppm or less.
[Item 3] The water-repellent composition according to the item 1 or 2, comprising at least one selected from the group consisting of an organic acid, a surfactant, and an organic solvent.
[Item 4] The water-repellent composition according to any one of the items 1 to 3, wherein a water dispersion prepared by dispersing the hydrophilic particle in water at a concentration of 10 g/l and adjusting a pH of the water dispersion to 7 has a zeta potential of +10 mV or higher.
[Item 5] The water-repellent composition according to any one of the items 1 to 4, wherein an amount of the hydrophilic particle is 2% by weight or more and 12% by weight or less based on a total amount of the hydrocarbon-based water-repellent resin and the hydrophilic particle.
[Item 6] The water-repellent composition according to any one of the items 1 to 5, wherein the hydrophilic particle has an average primary particle size of less than 40 nm.
[Item 7] The water-repellent composition according to any one of the items 1 to 6, wherein the hydrophilic particle is an inorganic particle.
[Item 8] The water-repellent composition according to any one of the items 1 to 7, wherein the hydrophilic particle is at least one selected from the group consisting of silica and alumina.
[Item 9] The water-repellent composition according to any one of the items 1 to 8, comprising at least one selected from the group consisting of silicone and wax.
[Item 10] The water-repellent composition according to any one of the items 1 to 9, wherein the hydrocarbon-based water-repellent resin is a polymer having a repeating unit derived from a monomer represented by the following formula:

   CH₂=C(-R¹²)-C(=O)-Y¹¹-(R¹¹)ₖ

   wherein R¹¹ is a hydrocarbon group having 5 to 40 carbon atoms,
   R¹² is a hydrogen atom, a monovalent organic group or a halogen atom,
   Y¹¹ is a divalent to tetravalent group composed of at least one selected from a direct bond, a divalent to tetravalent hydrocarbon group having one carbon atom, -C₆H₄-, -O-, - C(=O)-, -S(=O)₂- and -NR'-, wherein R' is a hydrogen atom or a hydrocarbon group having 1 to 4 carbon atoms, and k is 1 to 3.
[Item 11] A method for producing the water-repellent composition according to any one of the items 1 to 10, comprising reacting a hydrocarbon-based water-repellent resin raw material in a medium comprising the hydrocarbon-based water-repellent resin raw material and the hydrophilic particle to obtain the hydrocarbon-based water-repellent resin.
[Item 12] A method for producing a treated product, comprising treating a substrate with the water-repellent composition according to any one of the items 1 to 10.
[Item 13] A textile product to which a solid component in the water-repellent composition according to any one of the items 1 to 10 is adhered.

### Advantageous Effects of Invention

The water-repellent composition in the present disclosure can impart both favorable water-repellency and favorable slip resistance to a substrate (particularly a textile product) and it has storage stability.

### Description of Embodiments

### <Water-Repellent Composition>

The water-repellent composition in the present disclosure contains a hydrocarbon-based water-repellent resin and a hydrophilic particle. The water-repellent composition may also contain other components (silicone, wax, an organic acid, a surfactant, an organic solvent, and the like).

### [Hydrocarbon-based water-repellent resin]

The hydrocarbon-based water-repellent resin is a water-repellent resin having a hydrocarbon group having 5 to 40 carbon atoms. The water-repellency refers to properties capable of adhering to a substrate to increase water-repellency thereof. The hydrocarbon-based water-repellent resin may be free of a perfluoroalkyl group having 8 or more carbon atoms, a perfluoroalkyl group having 6 or more carbon atoms, a perfluoroalkyl group, a fluoroalkyl group, or a fluorine atom. The hydrocarbon-based water-repellent resin is preferably a non-fluororesin.

The hydrocarbon-based water-repellent resin is a polymer. The polymers herein include not only a compound with a large molecular weight (for example, a molecular weight of 2,000 to 10,000,000), but also a compound that is an oligomer (for example, a molecular weight of 200 to less than 2,000). The polymer may be a compound obtained by reaction of at least two compounds (for example, monomers) (one type of compounds or two types of compounds). The type of polymer is not limited as long as it has a hydrophobic unit. A method for modifying the hydrophobic unit in the polymer is not limited, and examples of the method include, for example, a method for polymerizing a monomer having a hydrocarbon group, a method for reacting a reactant having a hydrocarbon group and a reactive group with a functional group of the polymer, and the like.

The hydrocarbon-based water-repellent resin generally has a hydrocarbon group having 5 to 40 carbon atoms. The hydrocarbon group is preferably an aliphatic hydrocarbon group, in particular a saturated aliphatic hydrocarbon group, and especially an alkyl group. The hydrocarbon group may be linear or branched, and preferably linear. The number of carbon atoms of the hydrocarbon group may be 6 or more, 8 or more, 10 or more, 11 or more, 12 or more, 14 or more, or 16 or more, and is preferably 10 or more. The number of carbon atoms of the hydrocarbon group may be 40 or less, 30 or less, 25 or less, 22 or less, or 20 or less, and is preferably 30 or less.

The hydrocarbon-based water-repellent resin may have 2 or more, 5 or more, 10 or more, 25 or more, 50 or more, 75 or more, 100 or more, 300 or more, or 500 or more hydrocarbon groups per molecule, and preferably has 10 or more hydrocarbon groups. It may have 1,000 or less, 500 or less, 300 or less, 100 or less, 75 or less, or 50 or less hydrocarbon groups per molecule.

A water contact angle of the hydrocarbon-based water-repellent resin may be 100° or more, 101° or more, 103° or more, 105° or more, 110° or more, 115° or more, or 120° or more. The water contact angle of the hydrocarbon-based water-repellent resin may be 160° or less, or 140° or less. The water contact angle of the hydrocarbon-based water-repellent resin is preferably within the above range in view of water-repellency. The phrase "water contact angle of the hydrocarbon-based water-repellent resin" refers to a water contact angle with respect to a spin-coated film obtained by being spin-coated with a hydrocarbon-based water-repellent resin dissolved in a good solvent.

The weight-average molecular weight of the hydrocarbon-based water-repellent resin may be 500 or more, 1,000 or more, 2,500 or more, 5,000 or more, 10,000 or more, 25,000 or more, or 50,000 or more, and is preferably 5,000 or more. The weight-average molecular weight of the hydrocarbon-based water-repellent resin may be 1,000,000 or less, 500,000 or less, 250,000 or less, 100,000 or less, 50,000 or less, 25,000 or less, or 10,000 or less, and it is preferably 100,000 or less.

The amount of the hydrocarbon-based water-repellent resin is 0.01% by weight or more, 0.5% by weight or more, 1% by weight or more, 3% by weight or more, 5% by weight or more, 10% by weight or more, 20% by weight or more, or 30% by weight or more based on the water-repellent composition. The amount of the hydrocarbon-based water-repellent resin is 60% by weight or less, 50% by weight or less, 40% by weight or less, 30% by weight or less, 20% by weight or less, 10% by weight or less, 5% by weight or less, or 3% by weight or less based on the water-repellent composition. For example, a water-repellent composition with a high concentration of hydrocarbon-based water-repellent resin may be stored, and diluted to an arbitrary concentration by adding a liquid medium as necessary upon usage as a repellent. For the water-repellent composition in the present disclosure, since the product stability is improved, a product having a high concentration, which conventionally had a problem with supply in terms of the stability, can be supplied.

Examples of the hydrocarbon-based water-repellent resin include a hydrocarbon-based acrylic polymer, hydrocarbon-based polyurethane, other hydrocarbon group-containing resins, and combinations thereof.

### [Hydrocarbon-Based Acrylic Polymer]

The hydrocarbon-based water-repellent resin may be a hydrocarbon-based acrylic polymer. The acrylic polymer refers to a polymer having a repeating unit derived from an acrylic monomer.

The hydrocarbon-based acrylic polymer includes a repeating unit derived from a hydrophobic monomer (a1). The hydrocarbon-based acrylic polymer may further include a repeating unit derived from at least one monomer selected from the group consisting of a chloride monomer (a2), a cyclic hydrocarbon group-containing monomer (a3) and a crosslinkable monomer (a4). The hydrocarbon-based acrylic polymer may further include a repeating unit derived from other monomer (a5).

### (Hydrophobic Monomer (a1))

The hydrophobic monomer (a1) has one ethylenically unsaturated double bond and a hydrocarbon group having 5 to 40 carbon atoms.

The hydrophobic monomer (a1) may have at least one hydrocarbon group having 5 to 40 carbon atoms. The hydrocarbon group is preferably an aliphatic hydrocarbon group, in particular a saturated aliphatic hydrocarbon group, and in particular an alkyl group. The hydrocarbon group may be linear or branched and preferably linear. The number of carbon atoms of the hydrocarbon group may be 6 or more, 8 or more, 10 or more, 11 or more, 12 or more, 14 or more, or 16 or more and preferably 10 or more. The number of carbon atoms of the hydrocarbon group may be 40 or less, 30 or less, 25 or less, 22 or less, or 20 or less and preferably 30 or less.

Hydrophobic monomer (a1) may be a monomer represented by the formula:

CH₂=C(-R¹²)-C(=O)-Y¹¹-(R¹¹)ₖ

wherein
R¹¹ is a hydrocarbon group having 5 to 40 carbon atoms, R¹² is a hydrogen atom, a monovalent organic group or a halogen atom,
Y¹¹ is a divalent to tetravalent group composed of at least one selected from a direct bond, a divalent to tetravalent hydrocarbon group having one carbon atom, -C₆H₄-, -O-, - C(=O)-, -S(=O)₂- and -NR'- wherein R' is a hydrogen atom or a hydrocarbon group having 1 to 4 carbon atoms, and k is 1 to 3.

R¹¹ is preferably a branched or linear (preferably long linear chain) hydrocarbon group. The hydrocarbon group is preferably an aliphatic hydrocarbon group, particularly a saturated aliphatic hydrocarbon group, and in particular an alkyl group. The -CH₃ group has a lower surface free energy than -CH₂- and is more likely to exhibit a liquid-repellency. For this reason, a structure with many branches and many -CH₃ groups is preferred. A long chain alkyl group of a certain length, on the other hand, exhibits a high liquid-repellency derived for its crystallinity. Therefore, it can be a branched hydrocarbon group (for example, a branched alkyl group), particularly a t-butyl group or isopropyl group, a group with a multi-branched structure, or a long chain hydrocarbon group (or a long linear hydrocarbon group), for example, an alkyl group. The number of carbon atoms of R¹¹ may be 5 or more, 6 or more, 8 or more, 10 or more, 11 or more, 12 or more, 14 or more, 16 or more, or 18 or more, and is preferably 10 or more. The number of carbon atoms of R¹¹ may be 40 or less, 30 or less, 25 or less, 20 or less, 15 or less, or 12 or less, and is preferably 30 or less.

k is 1, 2 or 3. k = 3 when Y¹¹ has a tetravalent hydrocarbon group having one carbon atom, for example, k = 2 when Y¹¹ has a trivalent hydrocarbon group having one carbon atom, for example, k = 1 when Y¹¹ has no trivalent or tetravalent hydrocarbon groups having one carbon atom (for example, when Y¹¹ has a divalent hydrocarbon group having one carbon atom (-CH₂-) (for example, 1 to 6 such groups)).

R¹² may be a hydrogen atom, methyl group, halogen atom, substituted or unsubstituted benzyl group, substituted or unsubstituted phenyl group. Alternatively, it may be a - CF₃ group. Examples of R¹² are a hydrogen atom, methyl group, chlorine atom, bromine atom, iodine atom, fluorine atom, -CF₃ group, and cyano group. R¹² is preferably a hydrogen atom, methyl group, and chlorine atom. R¹² is more preferably a methyl group. When R¹² is a methyl group, a higher liquid-repellency can be obtained. R¹² may be a hydrogen atom in view of particularly its reactivity.

Y¹¹ is preferably a divalent group. Examples of divalent to tetravalent hydrocarbon groups having one carbon atom are -CH₂-, -CH= with a branched structure and -C= with a branched structure.

Y¹¹ may be -Y'-, -Y'-Y'-, -Y'-C(=O)-, -C(=O)-Y'-, -Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'- wherein, Y' is each independently a direct bond, -O-, -NR'- (where R' is a hydrogen atom or a hydrocarbon group having 1 to 4 carbon atoms) or -S(=O)₂-, and X' is -(CH₂)ₘ- (where m is an integer of 1 to 5), a linear hydrocarbon group having an unsaturated bond having 1 to 5 carbon atoms, a hydrocarbon group having a branched structure having 1 to 5 carbon atoms, or - (CH₂)₁-C₆H₄-(CH₂)ₗ- (where l is each independently an integer of 0 to 5, and -C₆H₄- is a phenylene group). It is preferable that Y¹¹ should not be a divalent hydrocarbon group singly.

Specific examples of Y¹¹ are -O-, -NH-, -O-C(=O)-, - NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-NH-S(=O)₂-, -NH-(CH₂)ₘ-S(=O)₂-NH-, -NH-(CH₂)ₘ-O-C(=O)-NH-, - NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, or -NH-(CH₂)ₘ-NH-C₆H₄-, wherein m is an integer of 1 to 5 and particularly 2 or 4.

Y¹¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or - O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH₂)ₘ-NH-C(=O)-O-, or -NH-(CHz)m-NH-C(=O)-NH-, wherein m is an integer of 1 to 5 and particularly 2 or 4. Y¹¹ is more preferably -O-, -O-(CH₂)ₘ-O-C(=O)-NH-, -O-(CH₂)ₘ-NH-C(=O)-O- or -O-(CH2)ₘ-NH-C(=O)-, -O-(CH₂)ₘ-NH-S(=O)₂- or -O-(CH₂)ₘ-S(=O)₂-NH-, and particularly preferably -O-(CH₂)ₘ-NH-C(=O)-.

Hydrophobic monomer (a1) is preferably free of a reactive group or hydrophilic group. Examples of the reactive groups are an epoxy group, chloromethyl group, bromomethyl group, iodomethyl group, isocyanate group, and block isocyanate group. Examples of the hydrophilic groups are a hydroxyl group, polyalkylene oxide group, amino group, carboxylic acid group, sulfonic acid group, phosphoric acid group, alkali metal or alkaline earth metal salt groups of carboxylic acid, sulfonic acid, or phosphoric acid, ammonium salt groups in which a chloride or bromide or iodide ion is a counter anion, and other ionic groups. Here, the reactive group may also serve as the hydrophilic group.

Hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less. A homopolymer of hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less.

A water contact angle of a homopolymer of hydrophobic monomer (a1) may be 75° or more, 80° or more, 85° or more, 90° or more, 95° or more, 100° or more, 101° or more, 103° or more, 105° or more, 110° or more, 115° or more, or 120° or more, and preferably 90° or more or 100° or more. The water contact angle of the homopolymer of hydrophobic monomer (a1) may be 160° or less, 150° or less, 140° or less, 130° or less, 125° or less, or 110° or less. The water contact angle within the aforementioned range is preferred in view of a liquid-repellency of a copolymer and particularly of a water-repellency. The water contact angle of the homopolymer may be a value obtained by spin-coating a surface of a silicon wafer substrate with a homopolymer solution with a solid content of 1.0% in chloroform, dropping 2 µL of water on the coating film, and measuring the contact angle 1 second after the dropping.

Specific examples of hydrophobic monomer (a1) are as follows. Each of the compounds of the following chemical formulas is an acrylic compound having a hydrogen atom at the α-position, and may also be a methacrylic compound having a methyl group at the α-position or an α-chloroacrylic compound having a chlorine atom at the α-position.

CH₂=CHC(=O)OC₁₈H₃₇

CH₂=CHC(=O)OCₙH₂ₙ₊₁

CH₂=CHC(=O)OC₂H₄OC(=O)NHC₁₈H₃₇

CH₂=CHC(=O)OC₂H₄NHC(=O)OC₁₈H₃₇

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCnH₂ₙ₊₁

CH₂=CHC(=O)OC₂H₄NHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O) NHCₙH₂ₙ₊₁

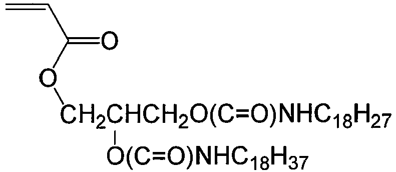

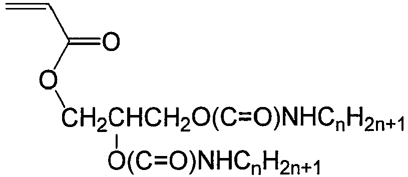

CH₂=CHC(=O)OCₘH₂ₘNHSO₂CₙH₂ₙ₊₁

CH₂=CHC(=O)OCₘH₂ₘSO₂NHCₙH₂ₙ₊₁

wherein n is a numeral of 3 to 40 and m is a numeral of 1 to 5.

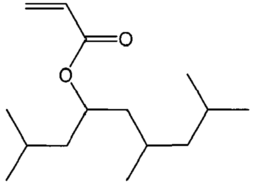

Preferred specific examples of hydrophobic monomer (a1) include stearyl (meth)acrylate, butyl (meth)acrylate, t-butyl (meth)acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, stearyl α-chloroacrylate, icosyl α-chloroacrylate, behenyl α-chloroacrylate, stearamidoethyl (meth)acrylate, 2-stearamidoethyl acrylate, CH₂=CHC(=O)OC₂H₄NHSO₂C₁₈H₃₇, and the like. These may be used singly or in combination of two or more thereof.

In view of the liquid-repellency of the water-repellent composition, hydrophobic monomer (a1) preferably contains a hydrophobic monomer (a1) having an amide group, urea group or urethane group. Hydrophobic monomer (a1) may be a combination of a hydrophobic monomer (a1) having an amide group, urea group or urethane group and a hydrophobic monomer (a1) free of an amide group, urea group or urethane group. Examples of hydrophobic monomer (a1) having an amide group, urea group or urethane group include CH₂=C(-R¹²)-C(=O)-O-(CH₂)ₘ-NH-C(=O)-R¹¹, CH₂=C(-R¹²)-C(=O)-O-(CH₂)ₘ-O-C(=O)-NH-R¹¹, CH₂=C(-R¹²)-C(=O)-O-(CH₂)ₘ-NH-C(=O)-O-R¹¹, and CH₂=C(-R¹²)-C(=O)-O-(CH₂)ₘ-NH-C(=O)-NH-R¹¹. Hydrophobic monomer (a1) may contain CH₂=C(-R¹²)-C(=O)-O-(CH₂)ₘ-NH-C(=O)-R¹¹. Herein, m may be an integer of 1 to 5, and particularly 2 or 4.

### (Chloride monomer (a2))

The hydrocarbon-based acrylic polymer may contain a repeating unit derived from at least one chloride monomer (a2) selected from the group consisting of vinyl chloride and vinylidene chloride. Chloride monomer (a2) is preferably vinyl chloride.

### (Cyclic hydrocarbon group-containing monomer (a3))

The hydrocarbon-based acrylic polymer may have a repeating unit derived from a cyclic hydrocarbon group-containing monomer (a3). Cyclic hydrocarbon group-containing monomer (a3) is a monomer having a cyclic hydrocarbon group and may be a monomer having one ethylenically unsaturated double bond and a cyclic hydrocarbon group.

Cyclic hydrocarbon group-containing monomer (a3) preferably has a (meth)acrylic group as an ethylenically unsaturated double bond, and for example, it may have a (meth)acrylate group or (meth)acrylamide group as an ethylenically unsaturated double bond.

The cyclic hydrocarbon group may be aliphatic or aromatic and is preferably aliphatic. The cyclic hydrocarbon group may be saturated or unsaturated and is preferably saturated. The cyclic hydrocarbon group may be a monocyclic group, polycyclic group, or bridged ring group and is preferably the bridged ring group. The cyclic hydrocarbon group may have a chain group (for example, linear or branched chain hydrocarbon group).

The number of carbon atoms of the cyclic hydrocarbon group may be 4 or more, 6 or more, or 8 or more, and may be 30 or less, 26 or less, 22 or less, 18 or less, or 14 or less.

Specific examples of the cyclic hydrocarbon groups include a cyclohexyl group, t-butylcyclohexyl group, adamantyl group, 2-methyl-2-adamantyl group, 2-ethyl-2-adamantyl group, bornyl group, isobornyl group, norbornyl group, dicyclopentanyl group, dicyclopentenyl group, benzyl group, phenyl group, naphthyl group, 2-t-butylphenyl group, a residual group formed by removing one or more hydrogen atoms from any of these groups (for example, a cyclohexylene group, adamantylene group, phenylene group, and naphthylene group), and a group formed by substituting any of these groups.

Specific examples of cyclic hydrocarbon group-containing monomer (a3) include cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate, and an acrylamide compound of any of these acrylates. These may be used singly or in combination of two or more thereof.

### (Crosslinkable monomer (a4))

The hydrocarbon-based acrylic polymer may have a repeating unit derived from a crosslinkable monomer (a4). Crosslinkable monomer (a4) is a monomer capable of imparting crosslinkability to a copolymer and may have at least two selected from the group consisting of a reactive group and an olefinic carbon-carbon double bond. Crosslinkable monomer (a4) may be a compound having at least two ethylenically unsaturated double bonds, or a compound having at least one ethylenically unsaturated double bond and at least one reactive group.

Crosslinkable monomer (a4) preferably has a (meth)acrylic group as an ethylenically unsaturated double bond, and for example, it may have a (meth)acrylate group or (meth)acrylamide group as an ethylenically unsaturated double bond.

Examples of the reactive groups include a hydroxyl group, epoxy group, chloromethyl group, block isocyanate group, amino group, carboxyl group, carbonyl group, and isocyanate group (block isocyanate group).

Specific examples of crosslinkable monomer (a4) include diacetone (meth)acrylamide, N-methylol (meth)acrylamide, hydroxyethyl (meth)acrylamide, glycidyl (meth)acrylate, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl(meth)acrylate, 1,4-butanediol di(meth)acrylate, 1,6-hexanediol di(meth)acrylate, 1,9-nonanediol di(meth)acrylate, neopentylglycol di(meth)acrylate, and an acrylamide compound from any of these acrylates. These may be used singly or in combination of two or more thereof. These may be used singly or in combination of two or more thereof.

### (Other monomer (a5))

The hydrocarbon-based acrylic polymer may contain a repeating unit derived from other monomer (a5) than monomers (a1) to (a4).

Specific examples of other monomers (a5) include ethylene, halogenated olefins, vinyl acetate, acrylonitrile, alkoxypolyalkylene glycol (meth)acrylate, and vinylalkyl ether. Other monomers are not limited to these examples. These may be used singly or in combination of two or more thereof.

### (Composition of polymer)

The amount of repeating units derived from hydrophobic monomer (a1) may be 15% by weight or more, 20% by weight or more, 25% by weight or more, 35% by weight or more, 45% by weight or more, 55% by weight or more, or 65% by weight or more, relative to the hydrocarbon-based acrylic polymer. The amount of repeating units derived from hydrophobic monomer (a1) may be 98% by weight or less, 95% by weight or less, 90% by weight or less, 80% by weight or less, 70% by weight or less, or 60% by weight or less, relative to the hydrocarbon-based acrylic polymer.

In the repeating units derived from hydrophobic monomer (a1), the proportion of hydrophobic monomer (a1) having an amide group, urea group or urethane group may be 1% by weight or more, 3% by weight or more, 5% by weight or more, 10% by weight or more, 20% by weight or more, 30% by weight or more, 50% by weight or more, or 75% by weight or more. In the repeating units derived from hydrophobic monomer (a1), the proportion of hydrophobic monomer (a1) having an amide group, urea group, or urethane group may be 100% by weight or less, 90% by weight or less, 80% by weight or less, or 70% by weight or less.

The amount of repeating units derived from chloride monomer (a2) may be 3% by weight or more, 5% by weight or more, 10% by weight or more, 15% by weight or more, 20% by weight or more, 25% by weight or more, or 35% by weight or more, relative to the hydrocarbon-based acrylic polymer. The amount of repeating units derived from chloride monomer (a2) may be 80% by weight or less, 70% by weight or less, 60% by weight or less, 50% by weight or less, 40% by weight or less, 30% by weight or less, 20% by weight or less, or 10% by weight or less, relative to the hydrocarbon-based acrylic polymer and preferably 60% by weight or less.

The amount of repeating units derived from cyclic hydrocarbon group-containing monomer (a3) may be 0.5% by weight or more, 1% by weight or more, 3% by weight or more, or 4% by weight or more, relative to the hydrocarbon-based acrylic polymer. The amount of repeating units derived from cyclic hydrocarbon group-containing monomer (a3) may be 30% by weight or less, 20% by weight or less, 15% by weight or less, 10% by weight or less, 7.5% by weight or less, or 5% by weight or less, relative to the hydrocarbon-based acrylic polymer.

The amount of repeating units derived from crosslinkable monomer (a4) may be 0.5% by weight or more, 1% by weight or more, 3% by weight or more, or 4% by weight or more, relative to the hydrocarbon-based acrylic polymer. The amount of repeating units derived from crosslinkable monomer (a4) may be 30% by weight or less, 20% by weight or less, 15% by weight or less, 10% by weight or less, 7.5% by weight or less, or 5% by weight or less, relative to the hydrocarbon-based acrylic polymer.

The amount of repeating units derived from other monomer (a5) may be 0.5% by weight or more, 1% by weight or more, 3% by weight or more, or 4% by weight or more, relative to the hydrocarbon-based acrylic polymer. The amount of repeating units derived from other monomer (a5) may be 30% by weight or less, 20% by weight or less, 15% by weight or less, 10% by weight or less, or 5% by weight or less, relative to the hydrocarbon-based acrylic polymer.

The amount of repeating units derived from chloride monomer (a2) may be 5 parts by weight or more, 10 parts by weight or more, 25 parts by weight or more, 50 parts by weight or more, 75 parts by weight or more, or 100 parts by weight or more, per 100 parts by weight of repeating units derived from hydrophobic monomer (a1). The amount of repeating units derived from chloride monomer (a2) may be 150 parts by weight or less, 125 parts by weight or less, 100 parts by weight or less, 75 parts by weight or less, 50 parts by weight or less, or 25 parts by weight or less, per 100 parts by weight of repeating units derived from hydrophobic monomer (a1).

The amount of repeating unit derived from cyclic hydrocarbon group-containing monomer (a3) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating unit derived from cyclic hydrocarbon group-containing monomer (a3) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

The amount of repeating units derived from crosslinkable monomer (a4) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating units derived from crosslinkable monomer (a4) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

The amount of repeating unit derived from other monomer (a5) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating units derived from other monomer (a5) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

The total of the repeating units derived from hydrophobic monomer (a1), and the repeating units derived from chloride monomer (a2) may be 50% by weight or more, 60% by weight or more, 75% by weight or more, 80% by weight or more, 85% by weight or more, 90% by weight or more, or 95% by weight or more, relative to the hydrocarbon-based acrylic polymer.

### (Amount of Hydrocarbon-Based Acrylic Polymer)

The amount of the hydrocarbon-based acrylic polymer is 0.01% by weight or more, 0.5% by weight or more, 1% by weight or more, 3% by weight or more, 5% by weight or more, 10% by weight or more, 20% by weight or more, or 30% by weight or more based on the water-repellent composition. The amount of hydrocarbon-based acrylic polymer is 60% by weight or less, 50% by weight or less, 40% by weight or less, 30% by weight or less, 20% by weight or less, 10% by weight or less, 5% by weight or less, or 3% by weight or less based on the water-repellent composition.

### [Hydrocarbon-Based Polyurethane]

The hydrocarbon-based water-repellent resin may be a hydrocarbon-based polyurethane. It may be a polyurethane having a hydrocarbon group having 5 to 40 carbon atoms.

The hydrocarbon-based polyurethane having a hydrocarbon group having 5 to 40 carbon atoms can be produced by reacting an isocyanate group-containing compound (for example, a monoisocyanate or polyisocyanate, specifically, a diisocyanate) and a hydroxyl group-containing compound having a hydrocarbon group having 5 to 40 carbon atoms. The reaction can be carried out, for example, at 80°C for 1 hour or longer.

The isocyanate group-containing compound is not limited, but for example, an aliphatic polyisocyanate compound, alicyclic polyisocyanate compound, aromatic polyisocyanate compound, aromatic-aliphatic polyisocyanate compound, or modified products of these isocyanate compounds, can be used. These may also be used in combinations of two or more thereof. As the isocyanate group-containing compound, the aliphatic polyisocyanate compound, aromatic polyisocyanate compound, or modified products of these isocyanate compounds, are preferred. The isocyanate group-containing compound is not limited, and examples thereof include, for example, an aliphatic polyisocyanate, alicyclic polyisocyanate, aromatic polyisocyanate, and modified polyisocyanates such as dimers and trimers of these compounds. Commercially available products such as "DESMODUR N-100" (trade name, manufactured by Bayer AG), "DURANATE THA-100" (trade name, manufactured by Asahi Kasei Corporation), "DURANATE 24A-100" (trade name, manufactured by Asahi Kasei Corporation), and the like, can be used.

As the aliphatic polyisocyanate compound, tetramethylene diisocyanate, dodecamethylene diisocyanate, hexamethylene diisocyanate (HDI), 2,2,4-trimethylhexamethylene diisocyanate, 2,4,4-trimethylhexamethylene diisocyanate, lysine diisocyanate, 2-methylpentane-1,5-diisocyanate, 3-methylpentane-1,5-diisocyanate, and the like, can be used. These may be used singly or in combinations of two or more thereof.

As the alicyclic polyisocyanate compound, isophorone diisocyanate, hydrogenated xylylene diisocyanate, 4,4'-dicyclohexylmethane diisocyanate, 1,4-cyclohexane diisocyanate, methylcyclohexylene diisocyanate, 1,3-bis(isocyanatemethyl)cyclohexane, and the like, can be used. These may be used singly or in combinations of two or more thereof.

As the aromatic polyisocyanate compound, dialkyldiphenylmethane diisocyanate, tolylene diisocyanate, 2,2'-diphenylmethane diisocyanate, 2,4'-diphenylmethane diisocyanate, 4,4'-diphenylmethane diisocyanate (monomeric MDI), polymethylene polyphenyl polyisocyanate (polymeric MDI), 4,4'-dibenzyl diisocyanate, 1,5-naphthylene diisocyanate, 1,3-phenylene diisocyanate, 1,4-phenylene diisocyanate, and the like, can be used. These may be used singly or in combinations of two or more thereof.

As the aromatic-aliphatic polyisocyanate compound, xylylene diisocyanate, a tetraalkyldiphenylmethane diisocyanate, α, α, α, α-tetramethylxylylene diisocyanate, and the like, can be used. These may be used singly or in combinations of two or more thereof.

As the modified product of the polyisocyanate compound, an isocyanurate modified product, biuret modified product, adduct modified product, carbodiimide modified product, bifunctionally modified product, and the like, can be used. These may be used singly or in combinations of two or more thereof.

Examples of the hydroxyl group-containing compound having a hydrocarbon group having 5 to 40 carbon atoms include hydroxyl group-containing compounds (monohydric alcohol derivatives or monovalent carboxylic acid derivatives) such as a hydrocarbon group-containing monoalcohol and a hydrocarbon group-containing monocarboxylic acid; hydroxyl group-containing compounds (polyhydric alcohol derivatives or polyhydric carboxylic acid derivatives) in which a hydrocarbon group having 5 to 40 carbon atoms was introduced into polyhydric alcohols or polyhydric carboxylic acids such as sorbitan, citrate, and pentaerythritol. The hydroxyl group-containing compound having a hydrocarbon group having 5 to 40 carbon atoms has at least one (for example, one, two, or three) hydroxyl group.

Preferred example of the hydroxyl group-containing compound having a hydrocarbon group having 5 to 40 carbon atoms are the compounds of polyhydric alcohol derivatives or polyhydric carboxylic acid derivatives of sorbitan (1a), citrate (1b), and pentaerythritol (1c), represented by the following formula: 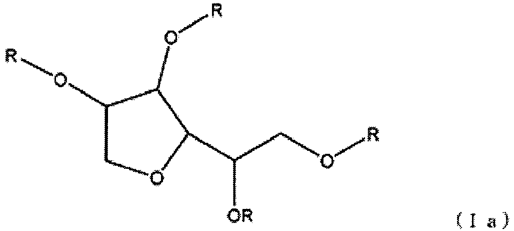 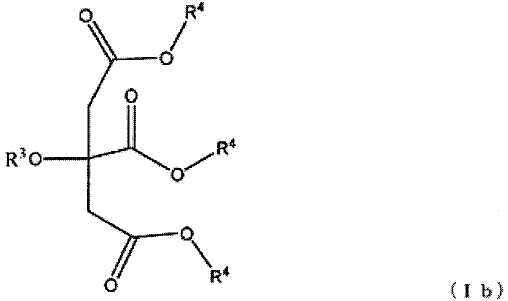 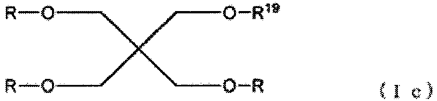 wherein R is each independently -H, -R¹, -C(O)R¹, - (CH₂CH₂O)ₙ(CH(CH₃)CH₂O)ₘR², or -(CH₂CH₂O)ₙ(CH(CH₃)CH₂O)ₘC(O)R¹,
n is each independently 0 to 20,
m is each independently 0 to 20,
m + n is more than 0,
R¹ is each independently a hydrocarbon group having 5 to 40 carbon atoms, optionally including at least one unsaturated bond,
R² is each independently -H or a hydrocarbon group having 5 to 40 carbon atoms, optionally including at least one unsaturated bond,
R³ is each independently -H, -R¹, -C(O)R¹, - (CH₂CH₂O)_{n'}(CH(CH₃)CH₂O)_{m'}R², or-(CH₂CH₂O)_{n'}(CH(CH₃)CH₂O)_{m'}C(O)R¹,
R⁴ is each independently -H, a hydrocarbon group having 5 to 40 carbon atoms, optionally including at least one unsaturated bond, or a combination thereof;-(CH₂CH₂O)_{n'}(CH(CH₃)CH₂O)_{m'}R²; or-(CH₂CH₂O)_{n'}(CH(CH₃)CH₂O)_{m'}C(O)R¹;
n' is each independently 0 to 20,
m' is each independently 0 to 20,
m' + n' is more than 0, and
each R¹⁹ is -H, -C(O)R¹, or -CH₂C[CH₂OR]₃.

When the compound is represented by Formula (Ia), the condition of at least one R or R² is -H,
when the compound is represented by Formula (Ib), the condition of at least one R², R³ or R⁴ is -H, and
when the compound is represented by Formula (Ic), the condition of at least one R¹⁹ or R is -H.

Specific examples of the hydroxyl group-containing compound having a hydrocarbon group having 5 to 40 carbon atoms include a sorbitan monocarboxylate, sorbitan dicarboxylate, sorbitan tricarboxylate, monoalkyl citrate, dialkyl citrate, trialkyl citrate, pentaerythritol monocarboxylate, pentaerythritol dicarboxylate, and pentaerythritol tricarboxylate. The carboxylate is preferably stearate or behenate. The hydrocarbon group is preferably an alkyl, and preferred examples of the alkyl are stearyl or behenyl.

The hydrocarbon-based polyurethane may be a dendritic polymer compound (dendrimer) with a radially and regularly branched structure from the center of the compound. The polyurethane obtained by the aforementioned reaction can be a dendritic polymer compound (dendrimer).

For the hydrocarbon-based polyurethane, the descriptions of WO2014/160906, WO2016/049278, and the like, can be referred to.

### (Amount of Hydrocarbon-Based Polyurethane)

The amount of hydrocarbon-based polyurethane is 0.01% by weight or more, 0.5% by weight or more, 1% by weight or more, 3% by weight or more, 5% by weight or more, 10% by weight or more, 20% by weight or more, or 30% by weight or more based on the water-repellent composition. The amount of hydrocarbon-based polyurethane is 60% by weight or less, 50% by weight or less, 40% by weight or less, 30% by weight or less, 20% by weight or less, 10% by weight or less, 5% by weight or less, or 3% by weight or less based on the water-repellent composition.

### [Other Hydrocarbon-Based Water-Repellent Resin]

The hydrocarbon-based water-repellent resin is not limited to the hydrocarbon-based acrylic polymer or hydrocarbon-based polyurethane. In place of, or in addition to the hydrocarbon-based acrylic polymer or hydrocarbon-based polyurethane, other hydrocarbon-based water-repellent resin can be used. Examples of the other hydrocarbon-based water-repellent resin include a dendrimer-based resin having a hydrocarbon group at its terminal. Examples of the dendrimer-based resin include RUCO-DRY series (for example, RUCO-DRY DHE, RUCO-DRY ECO, and RUCO-DRY ECO PLUS), manufactured by Rudolph GmbH, and the like.

### [Hydrophilic Particle]

The water-repellent composition in the present disclosure contains a hydrophilic particle. Herein, the hydrophilicity refers to properties of a particle that easily disperses in a water solvent without aggregation of the particles. For example, in a case in which to a water solvent were added 1.0% by weight of particle powder and an arbitrary dispersant, the mixture was stirred at 700 rpm for 10 minutes by using a homomixer, and then allowed to stand for 1 hour, when no precipitation or aggregation of the particles can be visually confirmed, the mixture is considered to be hydrophilic. For a commercially available particle water dispersion in a state where particles are dispersed in a water solvent, the particle contained therein is considered to be hydrophilic.

The hydrophilic particle may have a hydrophilic group on its surface. Examples of the hydrophilic group include a cationic group, anionic group, amino group, hydroxyl group, and the like. The surface of hydrophilic particle may be subjected to hydrophilic treatment, but generally, is not subjected to hydrophobic treatment.

The hydrophilic particle is not limited as long as it has hydrophilicity, and examples thereof include inorganic particles (for example, inorganic oxide particles) such as alumina, silica, and titania, and organic particles such as latex, acrylic, and nylon. Among them, the inorganic particles are preferred in terms of ease of handleability and the like, and at least one selected from the group consisting of silica and alumina is particularly preferred. As commercially available products thereof, examples of silicon oxide particles include "SNOWTEX ST-OYL," "SNOWTEX ST-AK-L," and "SNOWTEX ST-AK -YL" (the above all are manufactured by Nissan Chemical Corporation), examples of titanium oxide particles include "TA300" and "TA300D" (manufactured by Fuji Titanium Industry Co., Ltd.), and examples of an aluminum oxide particle include "TM-5D" (manufactured by Taimei Chemical Industry Co., Ltd.). These may be used singly or in combinations of two or more thereof.

### (Average Primary Particle Size)

The average primary particle size of the hydrophilic particles may be 5 nm or more, 10 nm or more, 15 nm or more, 20 nm or more, 25 nm or more, or 30 nm or more. The average primary particle size of the hydrophilic particles is 600 nm or less, 400 nm or less, 200 nm or less, 100 nm or less, 40 nm or less, 37.5 nm or less, 35 nm or less, 32.5 nm or less, 30 nm or less, 27.5 nm or less, 25 nm or less, or 22.5 nm or less, and is preferably 40 nm or less. Within the above range of the average primary particle size of the hydrophilic particles, water-repellency, slip resistance, and storage stability can be favorably combined. The average primary particle size can be measured with a microscope (scanning electron microscope or transmission electron microscope). Specifically, an arbitrary location on fabric is observed with a microscope from above at an arbitrary magnification. Next, when the particle shape is spherical, the particle diameter is considered to be a particle size, and when the particle shape is non-spherical, an average value of the longest length and the shortest length is considered to be a particle size. Particle sizes of all the particles present within the field of view are measured, and again measured by moving the field of view repeatedly to measure particle sizes at 10 or more points, and the average value thereof is taken as an average primary particle size.

### (Turbidity)

The turbidity of a water dispersion prepared by dispersing a hydrophilic particle in water at a concentration of 10 g/l and adjusting a pH to 7 may be 0.1 ppm or more, 1 ppm or more, 5 ppm or more, or 10 ppm or more. The turbidity of the water dispersion prepared by dispersing a hydrophilic particle in water at a concentration of 10 g/l and adjusting a pH to 7 is 200 ppm or less, 100 ppm or less, 50 ppm or less, 20 ppm or less, 10 ppm or less, 5 ppm or less, or 2.5 ppm or less, and is preferably 20 ppm or less. Within the above range of the turbidity, water-repellency, slip resistance, and storage stability can be favorably combined. The turbidity was calculated by using an integrating sphere type turbidimeter PT200 manufactured by Nitto Seiko Analytech Co., Ltd., obtaining a calibration curve (in a range of 0 to 1,000 ppm) using turbidity of kaolin (pigment) as a standard sample based on Testing methods for water, JIS K0101, and making calculation based on the calibration curve.

### (Zeta Potential)

The zeta potential of the water dispersion prepared by dispersing a hydrophilic particle in water at a concentration of 10 g/l and adjusting a pH to 7 may be - 20 mV or higher, -10 mV or higher, 0 mV or higher, +5 mV or higher, +10 mV or higher, or +20 mV or higher, and is preferably 0 mV or higher or +10 mV or higher. The zeta potential of the water dispersion prepared by dispersing a hydrophilic particle in water at a concentration of 10 g/l and adjusting a pH to 7 may be +200 mV or lower, +150 mV or lower, +100 mV or lower, +50 mV or lower, +30 mV or lower, +100 mV or lower, +10 mV or lower, or +5 mV or lower, and is preferably 100 mV or lower. Within the above range of the zeta potential, the water-repellency, slip resistance, and storage stability can be favorably combined. The zeta potential can be measured by using, for example, a commercially available zeta potential measurement apparatus.

### (Amount of Hydrophilic Particle)

The amount of hydrophilic particle is 0.01% by weight or more, 0.1% by weight or more, 0.3% by weight or more, 0.5% by weight or more, 1% by weight or more, 2% by weight or more, 3% by weight or more, or 5% by weight or more, and is preferably 0.5% by weight or more and particularly preferably 2% by weight or more based on the total amount of the hydrocarbon-based water-repellent resin and the hydrophilic particle. The amount of the hydrophilic particle is 60% by weight or less, 50% by weight or less, 40% by weight or less, 30% by weight or less, 20% by weight or less, 10% by weight or less, 5% by weight or less, 3% by weight or less, or 2% by weight or less, and is preferably 12% by weight or less based on the total amount of the hydrocarbon-based water-repellent resin and the hydrophilic particle. Within the above range of the amount of hydrophilic particle, the water-repellency, slip resistance, and storage, stability can be favorably combined. When the amount of hydrophilic particle is 2% by weight or more based on the total amount of the hydrocarbon-based water-repellent resin and the hydrophilic particle, the slip resistance can be particularly favorable.

### [Silicone]

The water-repellent composition in the present disclosure preferably contains silicone in addition to the hydrocarbon-based water-repellent resin. Containing silicone favorably enables combining the water-repellency, slip resistance, and storage stability.

The silicone may be the polymer represented by formula:

(R⁵³)₃Si-O-[-Si(R⁵¹)₂-O-]ₐ-[-Si(R⁵¹)₂-O-]_{b}-Si(R⁵³)₃ (S1)

wherein R⁵¹ each independently represents a hydrogen atom, an alkyl group having 1 to 40 carbon atoms, an aryl group having 6 to 40 carbon atoms, or an alkoxy group having 1 to 40 carbon atoms,
R⁵³ each independently represents a hydrogen atom, an alkyl group having 1 to 40 carbon atoms, an aryl group having 6 to 40 carbon atoms, an alkoxy group having 1 to 40 carbon atoms, or a saturated hydrocarbon group having 1 to 40 carbon atoms,
a represents an integer of 0 or more, b represents an integer of 1 or more, and (a + b) is 5 to 200.

In R⁵¹ and R⁵³, the alkyl group having 1 to 40 carbon atoms and the aryl group having 6 to 40 carbon atoms may be unsubstituted or substituted.

Specific examples of R⁵¹ and R⁵³ include a methyl group, ethyl group, propyl group, butyl group, pentyl group, hexyl group, heptyl group, octyl group, nonyl group, decyl group, dodecyl group, tetradecyl group, hexadecyl group, octadecyl group; cyclopentyl group, cyclohexyl group, cycloheptyl group; phenyl group, tolyl group, naphthyl group, or groups in which hydrogen atoms bonded to these groups are partially or totally substituted with halogen atoms, amino groups, cyano groups, or the like. R⁵¹ and R⁵³ are each preferably a methyl group or ethyl group.

In R⁵¹ and R⁵³, the alkoxy group having 1 to 40 carbon atoms may be linear or branched. Examples of the alkoxy group having 1 to 40 carbon atoms are a methoxy group, ethoxy group, propoxy group, and butoxy group.

The silicone may have at least one long chain hydrocarbon group. For example, at least one of R⁵¹, at least one of R⁵³, or at least one of each of R⁵¹ and R⁵³, in Formula (S1) may be a long chain hydrocarbon group, and at least one (for example, one) of R⁵¹ may be a long chain hydrocarbon group. Herein, the long chain hydrocarbon group may be a saturated hydrocarbon group having 6 or more, 10 or more, 15 or more, or 20 or more carbon atoms, preferably 10 or more or 23 or more carbon atoms. Herein, the hydrocarbon group may be linear or branched, and is preferably an alkyl group. Specific examples of the hydrocarbon group include a hexyl group (6 carbon atoms), octyl group (8 carbon atoms), lauryl group (12 carbon atoms), myristyl group (14 carbon atoms), stearyl group (18 carbon atoms), behenyl group (22 carbon atoms), tricosyl group (23 carbon atoms), lignoceryl group (tetracosyl group, 24 carbon atoms), serotyl group (hexacosyl group, 26 carbon atoms), montyl group (octacosyl group, 28 carbon atoms), melicyl group (triacontane group, 30 carbon atoms), and dotriacontane group (32 carbon atoms).

In terms of ease of industrial manufacture and availability, R⁵¹ and R⁵³ other than the R⁵¹ and R⁵³ that are long chain hydrocarbon groups, are preferably hydrogen atoms or methyl groups and more preferably methyl groups.
a is an integer 0 or more. In terms of ease of industrial manufacture and availability, a may be 40 or less, 30 or less, or 20 or less, and is preferably 30 or less.

The total of a and b is 5 to 200. In terms of ease of industrial manufacture, availability, and handleability, the total of a and b is preferably 10 to 100 and more preferably 40 to 60. a may be 0 to 150, for example, 1 to 100. The lower limit of b may be 1 or 2 or 3, and the upper limit of b may be 150, 10 or 5.

When a or b is 2 or more, each of R⁵¹ and R⁵² that are present in plurality may be the same or different.

50 mol% or more of the total amount of R⁵¹ and R⁵³ groups (for example, the R⁵¹, R⁵² group, and R⁵³ group when represented in the following Formula (S2)) is preferably a methyl group.

The occurrence order of the repeating unit bracketed by a or b is not limited to the occurrence order of the repeating unit represented in the chemical formula, and is arbitrary. Namely, the silicone may be a random polymer or a blocked polymer.

For example, the silicone may be the polymer represented by formula:

(R⁵³)₃Si-O-[-Si(R⁵¹)₂-O-]ₐ-[-Si(R⁵¹)(R⁵²)-O-]_{b}-Si(R⁵³)₃ (S2)

wherein R⁵¹ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
R⁵² each independently represents a long chain hydrocarbon group,
R⁵³ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
a represents an integer of 0 or more, b represents an integer of 1 or more, and (a + b) is 5 to 200.

In Formula (S2), R⁵¹ and R⁵³ may have an alkyl group having 3 to 40 carbon atoms or an unsaturated hydrocarbon group having 6 to 40 carbon atoms (for example, a hydrocarbon group having an aromatic ring), but are preferably free of these groups.

An example of the silicone is as follows: 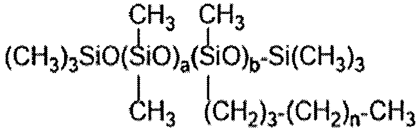
wherein a represents an integer of 0 to 150,
b represents an integer of 1 to 150,
(a + b) is 5 to 200, and
n is an integer of 1 to 36 (n is preferably a long chain hydrocarbon group).

The silicone can be synthesized by conventionally known methods. The silicone can be obtained, for example, by subjecting silicone having a SiH group to a hydrosilylation reaction with an α-olefin.

Examples of the silicone having a SiH group include, for example, methyl hydrogen silicone with a degree of polymerization of 10 to 200, or a copolymer of dimethyl siloxane and methyl hydrogen siloxane. Among them, the methyl hydrogen silicone is preferred in terms of ease of industrial manufacture and availability. The hydrogen silicone (for example, methyl hydrogen silicone) is that in which a side chain of a polydiorganosiloxane is partially substituted with hydrogen and the hydrogen atom is directly connected to the silicon atom. In using the hydrogen silicone, a catalyst may be used to improve its reactivity. For example, zinc, tin, manganese, cobalt, iron, and amine-based catalyst can be used. As these catalysts, an organic acid metal salt is preferred, and as the organic acid, a fatty acid is preferred. From a safety point of view, zinc stearate and the like can be used. Use of 10 to 40% of the catalyst relative to methyl hydrogen silicone, facilitates demonstrating its effect, which is preferred. Two or more types of amino-modified or epoxy-modified silicone, carboxy-modified silicone, and methyl hydrogen silicone may be mixed. Preferably, all of the silicones have reactive groups and are those having film formability. The film formability means that after the silicone in an emulsion state is adhered to a fiber surface, the silicone forms a solid film and does not become an oil or gel.

The α-olefin is a compound from which a long chain hydrocarbon group is derived in silicone. Specific examples of the α-olefin are 1-tricosene, 1-tetracosene, 1-hexacosene, 1-octacosene, 1-triacontene, and 1-dotriacontene.

The hydrosilylation reaction may be carried out by reacting the silicone having a SiH group with the α-olefin stepwisely or all at once in the presence of a catalyst, if necessary.

The amounts of the silicone having a SiH group and α-olefin used in the hydrosilylation reaction can be appropriately selected depending on a SiH group equivalent, the number average molecular weight, or the like, of the silicone having a SiH group.

Examples of the catalyst used in the hydrosilylation reaction include compounds such as platinum and palladium, and among them, the platinum compound being preferred. Examples of the platinum compound include platinum (IV) chloride.

The reaction conditions for the hydrosilylation reaction are not limited and can be appropriately adjusted. A reaction temperature is, for example, 10 to 200°C and preferably 50 to 150°C. A reaction time can be, for example, 3 to 12 hours when the reaction temperature is 50 to 150°C.

The hydrosilylation reaction is preferably carried out under an inert gas atmosphere. Examples of the inert gas include, for example, nitrogen, argon, and the like. The reaction proceeds in the absence of solvent, however, a solvent may also be used. Examples of the solvent include, for example, dioxane, methyl isobutyl ketone, toluene, xylene, butyl acetate, and the like.

### (Reactive Silicone)

The silicone may include reactive silicone. Examples of the reactive silicone include polysiloxanes having a reactive group on a side chain, at one terminal, at each of both terminals, or on a side chain and each of both terminals, and may be a polysiloxane having a reactive group on a side chain and/or at each of both terminals in view of excellent sliding resistance as well as water-repellency at the same time. The reactive silicone is not limited as long as it has a reactive group in its molecule, and examples thereof include, for example, amino-modified silicone, epoxy-modified silicone, carboxy-modified silicone, hydrogen-modified silicone, and the like. The reactive silicone may be silicone in which one or more substituents in the above Formula (S1) or Formula (S2) are substituted with reactive groups.

Examples of the amino-modified silicone include those having a structure in which an amino group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. The amino group may be any of a primary amino group, secondary amino group, or tertiary amino group. Examples of the organic group to which an amino group is bonded include: a 2-aminoethyl group, N-methyl-2-aminoethyl group, N,N-dimethyl-2-aminoethyl group, N-ethyl-2-aminoethyl group, N,N-diethyl-2-aminoethyl group, N,N-methylethyl-2-aminoethyl group, 3-aminopropyl group, N-methyl-3-aminopropyl group, N,N-dimethyl-3-aminopropyl group, N-ethyl-3-anopropyl group, N,N-diethyl-3-aminopropyl group, and N,N-methylethyl-3-aminopropyl group. These functional groups may be on a side chain of a polysiloxane or at the terminal thereof.

Examples of the epoxy-modified silicone include those having a structure in which an epoxy group is bonded to an organic group directly connected to a silicon atom. The organic group may be either an alkylene group or a divalent aromatic group. The epoxy group in this case usually bonds to the organic group to form a glycidyl ether. Examples of such a functional group include a 3-glycidoxypropyl group and 2-glycidoxyethyl group. These functional groups may be on a side chain of a polysiloxane or at the terminal thereof.

Examples of the carboxy-modified silicones include those having a structure in which a carboxy group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. Examples of such a functional group include a 3-carboxypropyl group and 2-carboxyethyl group. These functional groups may be on a side chain of a polysiloxane or at the terminal thereof.

### (Amount of Silicone)

The amount of silicone may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrocarbon-based water-repellent resin. The amount of silicone is 50 parts by weight or less, 40 parts by weight or less, 30 parts by weight or less, 20 parts by weight or less, 10 parts by weight or less, or 5 parts by weight or less, per 100 parts by weight of the hydrocarbon-based water-repellent resin.

### [Wax]

The water-repellent composition in the present disclosure preferably contains wax in addition to the hydrocarbon-based water-repellent resin. Containing the wax can favorably combine the water-repellency, slip resistance, and storage stability. The water-repellent composition in the present disclosure may contain both silicone and wax, or may contain either silicone or wax singly.

Examples of the wax include paraffin wax, microcrystalline wax, Fischer-Tropsch wax, polyolefin wax (polyethylene wax, polypropylene wax, etc.), oxidized polyolefin wax, animal and vegetable wax, mineral wax, and the like. The paraffin wax is preferred. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The number of carbon atoms in the compounds constituting the wax is preferably 20 to 60, for example 25 to 45. The molecular weight of the wax may be 200 to 2,000, for example, 250 to 1,500, or 300 to 1,000. These may be used singly or in combinations of two or more thereof.

The melting point of the wax may be 50°C or higher, 55°C or higher, 60°C or higher, 65°C or higher, or 70°C or higher, and is preferably 55°C or higher and more preferably 60°C or higher. The melting point of the wax is measured in accordance with JIS K 2235-1991.

### (Amount of Wax)

The amount of wax may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrocarbon-based water-repellent resin. The amount of wax may be 50 parts by weight or less, 40 parts by weight or less, 30 parts by weight or less, 20 parts by weight or less, 10 parts by weight or less, or 5 parts by weight or less, per 100 parts by weight of the hydrocarbon-based water-repellent resin.

### [Liquid Medium]

The water-repellent composition includes a liquid medium. The liquid medium is water, an organic solvent, or a mixture of water and organic solvent. It is preferably a mixture of water and organic solvent. Containing the organic solvent can favorably combine the water-repellency, slip resistance, and storage stability.

Examples of the organic solvent include esters (for example, esters having 2 to 40 carbon atoms, specifically ethyl acetate and butyl acetate), ketones (for example, ketones having 2 to 40 carbon atoms, specifically methyl ethyl ketone and diisobutyl ketones), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may contain a compound having at least one hydroxy group (for example, an alcohol, a polyhydric alcohol such as a glycol-based solvent, an ether (for example, monoether) of polyhydric alcohol, and the like). These may be used singly or in combinations of two or more thereof.

### (Amount of Liquid Medium)

The amount of liquid medium may be 40% by weight or more, 50% by weight or more, 60% by weight or more, 70% by weight or more, 80% by weight or more, 90% by weight or more, 95% by weight or more, or 97% by weight or more based on the water-repellent composition. The amount of the liquid medium is 99.9% by weight or less, 99% by weight or less, 95% by weight or less, 90% by weight or less, 80% by weight or less, 70% by weight or less, 60% by weight or less, or 50% by weight or less based on the water-repellent composition.

The amount of the organic solvent may be 0.5% by weight or more, 1% by weight or more, 2% by weight or more, 3% by weight or more, 5% by weight or more, 7.5% by weight or more, 10% by weight or more, 12.5% by weight or more, 15% by weight or more, or 20% by weight or more based on the water-repellent composition. The amount of the organic solvent may be 75% by weight or less, 50% by weight or less, 40% by weight or less, 30% by weight or less, 25% by weight or less, 20% by weight or less, 15% by weight or less, 10% by weight or less, or 5% by weight or less based on the water-repellent composition.

The amount of the organic solvent may be 1% by weight or more, 3% by weight or more, 5% by weight or more, 10% by weight or more, 20% by weight or more, 30% by weight or more, or 40% by weight or more based on the liquid medium. The amount of organic solvent may be 55% by weight or less, 45% by weight or less, 35% by weight or less, 25% by weight or less, 15% by weight or less, 12.5% by weight or less, 7.5% by weight or less, or 5.0% by weight or less based on the liquid medium.

The amount of the organic solvent is 1 part by weight or more, 3 parts by weight or more, 5 parts by weight or more, 10 parts by weight or more, 20 parts by weight or more, 30 parts by weight or more, 40 parts by weight or more, or 50 parts by weight or more, per 100 parts by weight of the hydrocarbon-based water-repellent resin. The amount of the organic solvent is 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less, per 100 parts by weight of the hydrocarbon-based water-repellent resin.

The amount of organic solvent may be 0.5 parts by weight or more, 1 part by weight or more, 1.5 parts by weight or more, 3 parts by weight or more, 5 parts by weight or more, 10 parts by weight or more, 15 parts by weight or more, 20 parts by weight or more, 30 parts by weight or more, or 40 parts by weight or more, per 100 parts by weight of water. The amount of organic solvent may be 100 parts by weight or less, 75 parts by weight or less, 50 parts by weight or less, 25 parts by weight or less, 10 parts by weight or less, or 5 parts by weight or less, per 100 parts by weight of water.

### [Organic Acid]

The water-repellent composition may also contain an organic acid. As the organic acid, a known organic acid can be used. Examples of the organic acid preferably include a carboxylic acid, sulfonic acid, sulfinic acid, and the like, with the carboxylic acid being particularly preferred. Examples of the carboxylic acid include formic acid, acetic acid, propionic acid, butyric acid, oxalic acid, succinic acid, glutaric acid, adipic acid, malic acid, citric acid, and the like, with the formic acid or acetic acid being particularly preferred. In the present disclosure, one type of organic acid may be used, or two or more types thereof may be combined for use. For example, formic acid and acetic acid may be combined for use.

### (Amount of Organic Acid)

The amount of organic acid may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrocarbon-based water-repellent resin. The amount of organic acid may be 50 parts by weight or less, 40 parts by weight or less, 30 parts by weight or less, 20 parts by weight or less, 10 parts by weight or less, or 5 parts by weight or less, per 100 parts by weight of the hydrocarbon-based water-repellent resin. The amount of organic acid may be adjusted so that the pH of the water-repellent composition is 3 to 10, for example 5 to 9 and particularly 6 to 8. The water-repellent composition may be acidic (pH 7 or less, for example 6 or less).

### [Dispersant]

The water-repellent composition may contain a dispersant to improve dispersibility of the hydrophilic particle. The dispersant may be a polymeric dispersant, preferably a hydrophilic polymeric dispersant. As the dispersant, a polyvinylpyrrolidone and polyvinyl alcohol, a polyglycerin, a polyacrylic acid salt, and the like, can be used. These may be used singly or in combinations of two or more thereof.

### (Amount of Dispersant)

The amount of the dispersant may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrophilic particles. The amount of the dispersant may be 50 parts by weight or less, 40 parts by weight or less, 30 parts by weight or less, 20 parts by weight or less, 10 parts by weight or less, or 5 parts by weight or less, per 100 parts by weight of the hydrophilic particles.

### [Surfactant]

The water-repellent composition preferably contains a surfactant. In the water-repellent composition, the surfactant may include a nonionic surfactant. Containing the surfactant can favorably combine the water-repellency, slip resistance, and storage stability. Further, the surfactant may include one or more surfactants selected from a cationic surfactant, an anionic surfactant, and an amphoteric surfactant. A combination of the nonionic surfactant and the cationic surfactant is preferably used.

### (Nonionic Surfactant)

Examples of the nonionic surfactant include an ether, ester, ester ether, alkanolamide, polyhydric alcohol, and amine oxide.

An example of the ether is a compound having an oxyalkylene group (preferably a polyoxyethylene group).

Examples of the ester are an ester of an alcohol and a fatty acid. Examples of the alcohol are a monovalent to hexavalent (particularly divalent to pentavalent) alcohol having 1 to 50 carbon atoms (particularly 10 to 30 carbon atoms) (for example, an aliphatic alcohol). An example of the fatty acid is a saturated or unsaturated fatty acid having 2 to 50 carbon atoms, particularly 5 to 30 carbon atoms.

An example of the ester ether is a compound obtained by adding an alkylene oxide (particularly ethylene oxide) to an ester of an alcohol and a fatty acid. Examples of the alcohol are a monovalent to hexavalent (particularly divalent to pentavalent) alcohol having 1 to 50 carbon atoms (particularly 3 to 30 carbon atoms) (for example, an aliphatic alcohol). An example of the fatty acid is a saturated or unsaturated fatty acid having 2 to 50 carbon atoms, particularly 5 to 30 carbon atoms.

An example of the alkanolamide is a compound formed of a fatty acid and an alkanolamine. The alkanolamide may be a monoalkanolamide or a dialkanolamide. An example of the fatty acid is a saturated or unsaturated fatty acid having 2 to 50 carbon atoms, particularly 5 to 30 carbon atoms. The alkanolamine may be an alkanol having 1 to 3 amino groups and 1 to 5 hydroxyl groups, having 2 to 50 carbon atoms, particularly 5 to 30 carbon atoms.

The polyhydric alcohol may be a divalent to pentavalent alcohol having 10 to 30 carbon atoms.

The amine oxide may be an oxide (for example, having 5 to 50 carbon atoms) of an amine (secondary amine or preferably tertiary amine).

The nonionic surfactant is preferably a nonionic surfactant having an oxyalkylene group (preferably a polyoxyethylene group). The number of carbon atoms of the alkylene group in the oxyalkylene group is preferably 2 to 10. The number of oxyalkylene groups in a molecule of the nonionic surfactant is generally preferably 2 to 100.

The nonionic surfactant is selected from the group consisting of an ether, ester, ester ether, alkanolamide, polyhydric alcohol, and amine oxide, and is preferably a nonionic surfactant having an oxyalkylene group.

The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), an alkylene oxide adduct of acetylene glycol, etc. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer).

The nonionic surfactant also preferably has a structure free of an aromatic group due to environmental issues (biodegradability, environmental hormones, and the like).

The nonionic surfactant may be the compound represented by formula:

R¹O-(CH₂CH₂O)ₚ-(R²O)_{q}-R³

wherein R¹ is an alkyl group having 1 to 22 carbon atoms, an alkenyl group having 2 to 22 carbon atoms, or an acyl group,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more, and
q is 0 or a numeral of 1 or more.

R¹ preferably has 8 to 20 carbon atoms, particularly 10 to 18 carbon atoms. Preferred specific examples of R¹ include a lauryl group, tridecyl group, and oleyl group.

Examples of R² are a propylene group and butylene group.

In the nonionic surfactant, p may be a numeral of 3 or more (for example, 5 to 200). q may be a numeral of 2 or more (for example, 5 to 200). That is, -(R²O)_{q}- may form a polyoxyalkylene chain.

The nonionic surfactant may be a polyoxyethylene alkylene alkyl ether including a hydrophilic polyoxyethylene chain and a hydrophobic oxyalkylene chain (particularly a polyoxyalkylene chain) in the center. Examples of the hydrophobic oxyalkylene chain include an oxypropylene chain, an oxybutylene chain, a styrene chain, and the like, and among them, the oxypropylene chain is preferred.

Specific examples of the nonionic surfactant include condensation products of ethylene oxide with hexylphenol, isooctylphenol, hexadecanol, oleic acid, an alkane (C₁₂-C₁₆) thiol, a sorbitan monofatty acid (C₇-C₁₉) or alkyl (C₁₂-C₁₈) amine, and the like.

A proportion of a polyoxyethylene block can be 5 to 80% by weight, for example, 30 to 75% by weight, and particularly 40 to 70% by weight based on the molecular weight of the nonionic surfactant (copolymer).

An average molecular weight of the nonionic surfactant is generally 300 to 5,000, for example, 500 to 3,000.

The nonionic surfactant may be a mixture of a compound with an HLB (hydrophilicity - hydrophobicity balance) of less than 15 (particularly 5 or less) and a compound with an HLB of 15 or more. An example of the compound with an HLB of less than 15 is a sorbitan fatty acid ester. An example of the compound with an HLB of 15 or more is a polyoxyethylene alkyl ether. A weight ratio of the compound with an HLB of less than 15 to the compound with an HLB of 15 or more may be 90:10 to 20:80, for example, 85:15 to 55:45.

The nonionic surfactant may be used singly or in admixture of two or more thereof.

### (Cationic Surfactant)

The cationic surfactant is preferably a compound free of an amide group.

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride.

Preferred examples of the cationic surfactant are the compounds of:

R²¹-N⁺(-R²²)(-R²³)(-R²⁴) X⁻

wherein R²¹, R²², R²³ and R²⁴ are hydrocarbon groups having 1 to 40 carbon atoms, and
X is an anionic group.

Specific examples of R²¹, R²², R²³ and -R²⁴ are alkyl groups (for example, a methyl group, butyl group, stearyl group, and palmityl group). Specific examples of X are halogen (for example, chlorine), acids (for example, hydrochloric acid and acetic acid).

The cationic surfactant is particularly preferably a monoalkyltrimethylammonium salt (the number of carbon atoms of the alkyl is 4 to 40).

The cationic surfactant is preferably an ammonium salt. The cationic surfactant may be the ammonium salt represented by formula:

R¹ₚ-N⁺R²_{q}X⁻

wherein R¹ is a C12 or more (for example, C₁₂ to C₅₀) linear and/or branched aliphatic (saturated and/or unsaturated) group,
R² is H or a C1 to C4 alkyl group, benzyl group, polyoxyethylene group (the number of oxyethylene groups is for example, 1 (particularly 2, especially 3) to 50)
(CH₃ and C₂H₅ are particularly preferred),
X is a halogen atom (for example), a C₁ to C₄ fatty acid base,
p is 1 or 2, q is 2 or 3, and p + q = 4. The number of carbon atoms of R¹ may be 12 to 50, for example, 12 to 30.

Specific examples of the cationic surfactant include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyldi(hydropolyoxyethylene)ammonium chloride, benzyldodecyldi(hydropolyoxyethylene)ammonium chloride, and N-[2-(diethylamino)ethyl]oleamide hydrochloride.

Examples of the anionic surfactant include an alkyl ether sulfate, alkyl sulfate, alkenyl ether sulfate, alkenyl sulfate, olefin sulfonate, alkanesulfonate, saturated or unsaturated fatty acid salt, alkyl or alkenyl ether carbonate, α-sulfone fatty acid salt, N-acylamino acid type surfactant, phosphate mono- or diester-type surfactant, and sulfosuccinic acid ester.

Examples of the amphoteric surfactant includes alanines, imidazolinium betaines, amido betaines, and betaine acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine.

The surfactant may be one type or a combination of two or more of each of the nonionic surfactant, cationic surfactant, and amphoteric surfactants.

### (Amount of Surfactant)

The amount of the surfactant may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrophilic particles. The amount of the surfactant may be 50 parts by weight or less, 40 parts by weight or less, 30 parts by weight or less, 20 parts by weight or less, 10 parts by weight or less, or 5 parts by weight or less, per 100 parts by weight of the hydrophilic particles.

The amount of the cationic surfactant may be 5% by weight or more, preferably 10% by weight or more, and more preferably 20% by weight or more based on the total amount of the surfactants. The weight ratio of the nonionic surfactant and the cationic surfactant is preferably 95:5 to 20:80 and more preferably 85:15 to 40:60.

The amount of the cationic surfactant may be 0.05 to 10 parts by weight, for example, 0.1 to 8 parts by weight, per 100 parts by weight of the water-repellent resin. The total amount of surfactants may be 0.1 to 20 parts by weight, for example, 0.2 to 10 parts by weight, per 100 parts by weight of the water-repellent resin.

### [Curing Agent]

The water-repellent composition may contain a curing agent (active hydrogen-reactive compound or active hydrogen-containing compound). The curing agent may be added to the water-repellent composition after a hydrocarbon-based water-repellent resin was obtained by polymerization.

The curing agent (crosslinking agent) in the water-repellent composition can favorably cure the hydrocarbon-based water-repellent resin. The curing agent may be an active hydrogen-reactive compound or an active hydrogen-containing compound that reacts with active hydrogen or an active hydrogen-reactive group of the hydrocarbon-based water-repellent resin. Examples of the active hydrogen-reactive compound include a polyisocyanate compound, an epoxy compound, a chloromethyl group-containing compound, a carboxyl group-containing compound, and a hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may be a polyisocyanate compound. The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,3-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane. These may be used singly or in combination of two or more thereof.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the water-repellent composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound. The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compound include chloromethyl polystyrene.

The carboxyl group-containing compound is a compound having a carboxyl group. Examples of the carboxyl group-containing compound include (poly)acrylic acid, and (poly)methacrylic acid.

Specific examples of the ketone group-containing compound include (poly)diacetone acrylamide, and diacetone alcohol.

Specific examples of the hydrazide compound include hydrazine, carbohydrazide, and adipic acid hydrazide.

Specific examples of the melamine compound include a melamine resin, and methyl etherified melamine resin.

### (Amount of Curing Agent)

The amount of the curing agent is 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrocarbon-based water-repellent resin. The amount of the curing agent is 50 parts by weight or less, 40 parts by weight or less, 30 parts by weight or less, 20 parts by weight or less, 10 parts by weight or less, or 5 parts by weight or less, per 100 parts by weight of the hydrocarbon-based water-repellent resin.

### [Other Component]

The water-repellent composition may contain other component other than the aforementioned components. After the hydrocarbon-based water-repellent resin was produced, the other component may be added. Examples of other components include water- and/or oil- repellent agents, anti-slip agents, antistatic agents, antiseptic agents, ultraviolet absorbers, antibacterial agents, deodorants, and perfumes. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl)piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU FHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Antistatic agent)

Examples of the antistatic agent include cationic antistatic agents with cationic functional groups such as quaternary ammonium salts, pyridinium salts, primary-, secondary-, and tertiary-amino groups; anionic antistatic agents with anionic functional groups such as sulfonic acid salts or sulfuric acid ester salts, phosphonic acid salts, phosphoric acid ester salts; amphoteric antistatic agents such as alkyl betaine and derivatives thereof, imidazoline and derivatives thereof, alanine and derivatives thereof, and nonionic antistatic agents such as amino alcohols and derivatives thereof, glycerin and derivatives thereof, and polyethylene glycol and derivatives thereof. The antistatic agent may be an ion-electric conductive polymer obtained by polymerizing or copolymerizing a monomer having these cationic, anionic or amphoteric ion-electric conductive groups. These may be used singly or in combination of two or more thereof.

### (Antiseptic agent)

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol. The content of antiseptic agent is preferably 0.0001 to 1% by weight relative to the total weight of the water-repellent composition. When the content of antiseptic agent is the lower limit value of the aforementioned range or more, a sufficient effect of antiseptic agent added is obtained, and when the content is the upper limit value or less, favorable storage stability of the water-repellent composition is obtained.

### (Ultraviolet absorber)

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Antibacterial agents)

The antibacterial agent is a component that exhibits the effect of inhibiting bacteria from growing on fibers and further exhibits the effect of inhibiting generation of unpleasant odors derived from decomposition products of microorganisms. Examples of the antibacterial agent include cationic bactericidal agents such as quaternary ammonium salts, zinc bis-(2-pyridylthio-1-oxide), polyhexamethylene biguanidine hydrochloride, 8-oxyquinoline, and polylysine.

### (Deodorants)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### (Perfume)

The perfumes are not limited, and a list of usable perfume materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Amount of other components)

The amount of the other components may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the hydrocarbon-based water-repellent resin. The amount of the other components may be 50 parts by weight or less, 40 parts by weight or less, 30 parts by weight or less, 20 parts by weight or less, 10 parts by weight or less, or 5 parts by weight or less, per 100 parts by weight of the hydrocarbon-based water-repellent resin.

### <Production of Water-Repellent Composition>

A method for producing the water-repellent composition may include a step of reacting (polymerizing) a hydrocarbon-based water-repellent resin raw material in a medium (for example, a liquid medium) containing the hydrocarbon-based water-repellent resin raw material and the hydrophilic particle to obtain the hydrocarbon-based water-repellent resin.

Alternatively, the method for producing the water-repellent composition may include a step of adding hydrophilic particle powder to solution or dispersion of a water-repellent resin, or a step of mixing the solution or dispersion of the water-repellent resin and a dispersion of the hydrophilic particle.

In order for the water-repellent composition to exhibit high water-repellency, it is preferable to subject the water-repellent composition to ultrasonic waves (ultrasonic treatment). The ultrasonic treatment is preferably performed immediately prior to application to a treatment target. For example, after an elapsed time of 1 minute to 1 hour following the ultrasonic treatment, the water-repellent composition is applied to the treatment target. The ultrasonic treatment can be performed by applying ultrasonic waves to the water-repellent composition. An ultrasonic generator is not limited, however, the output is preferably 500 W or more, for example, 500 to 2,000 W is preferable in terms of enabling efficient mixing. The ultrasonic treatment time may be 0.5 to 60 minutes. For example, treatment with a 500 W ultrasonic generator for 10 minutes results in a uniform water-repellent composition.

Without wishing to be bound by the theory, it is considered that aggregated particles that were aggregated by primary particles, are separated followed by being primary particles with a suitable particle size by ultrasonic treatment (ultrasonic cleaning), resulting in exhibiting high water-repellency.

Solution or dispersion of the water-repellent resin is generally solution or dispersion of a polymer having a hydrocarbon group.

The polymer having a hydrocarbon group can be produced by any of ordinary polymerization methods, and the conditions of the polymerization reaction can be arbitrarily selected. Examples of such a polymerization method include a solution polymerization, suspension polymerization, emulsion polymerization, and condensation polymerization.

In solution polymerization, a method is employed that includes dissolving a monomer in an organic solvent in the presence of a polymerization initiator, followed by nitrogen purge, and then heating and stirring the mixture at 30 to 120°C for 1 to 10 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount within a range of 0.01 to 20 parts by weight, for example, 0.01 to 10 parts by weight, per 100 parts by weight of the monomer.

The organic solvent is a solvent that is inert to the monomer and dissolves them, and it may be esters (for example, esters having 2 to 40 carbon atoms, specifically ethyl acetate and butyl acetate), ketones (for example, ketones having 2 to 40 carbon atoms, specifically methyl ethyl ketone, diisobutyl ketone, and methyl isobutyl ketone), alcohols (for example, alcohols having 1 to 40 carbon atoms, specifically ethanol, butanol, and isopropyl alcohol). Specific examples of the organic solvent include acetone, chloroform, HCHC225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in an amount within a range of 10 to 3,000 parts by weight, for example, 50 to 2,000 parts by weight, per 100 parts by weight of the total amount of the monomers.

In the emulsion polymerization, a method is adopted in which a monomer is emulsified in water in the presence of a polymerization initiator and an emulsifier, and following nitrogen substitution, polymerization is carried out by stirring at a temperature in a range of 50 to 80°C for 1 to 20 hours. The polymerization initiator used is water-soluble compounds such as benzoyl peroxide, lauroyl peroxide, t-butyl perbenzoate, 1-hydroxycyclohexylhydroperoxide, 3-carboxypropionyl peroxide, acetyl peroxide, azobisisobutylamidine-dihydrochloride, sodium peroxide, potassium persulfate, and ammonium persulfate, and oil-soluble compounds such as azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount within a range of 0.01 to 10 parts by weight per 100 parts by weight of the monomer.

In order to obtain a polymer water-dispersion with excellent standing stability, it is desirable to micronize a monomer and polymerize it in water by using an emulsification apparatus that can impart powerful pulverization energy, such as a high-pressure homogenizer or ultrasonic homogenizer. As an emulsifier, various types of an anionic, cationic or nonionic emulsifier can also be used, and it is used in an amount within a range of 0.5 to 20 parts by weight per 100 parts by weight of monomer. An anionic and/or nonionic and/or cationic emulsifiers are preferably used. In a case in which the monomers are not completely compatible with each other, a compatibilizer that sufficiently compatibilizes these monomers, such as a water-soluble organic solvent or a low molecular weight monomer, is preferably added. The addition of the compatibilizer can improve emulsifiability and copolymerizability.

As the water-soluble organic solvent, the aforementioned organic solvents may be used. Examples thereof include, for example, acetone, methyl ethyl ketone, ethyl acetate, propylene glycol, dipropylene glycol monomethyl ether, dipropylene glycol, tripropylene glycol, ethanol, and the like, and each may be used in an amount within a range of 1 to 50 parts by weight, for example, 10 to 40 parts by weight, per 100 parts by weight of water. Examples of the low molecular weight monomer also include, for example, methyl methacrylate, glycidyl methacrylate, 2,2,2-trifluoroethyl methacrylate, and the like, and each may be used in an amount within a range of 1 to 50 parts by weight, for example, 10 to 40 parts by weight, per 100 parts by weight of the total amount of the monomers.

A chain transfer agent may be used in the polymerization. The molecular weight of the polymer can be changed according to the amount of the chain transfer agent used. Examples of the chain transfer agent include mercaptan group-containing compounds such as lauryl mercaptan, thioglycol, and thioglycerol (in particular alkyl mercaptan (for example, having 1 to 40 carbon atoms)), and inorganic salts such as sodium hypophosphite and sodium hydrogen sulfite. The amount of the chain transfer agent used may be in the range of 0.01 to 10 part by weight, for example, 0.1 to 5 parts by weight, relative to 100 parts by weight of the total amount of the monomers.

The water-repellent composition may be in the form of solution, emulsion (particularly an aqueous dispersion), or an aerosol.

### <Applications of water-repellent composition>

Examples of applications of the water-repellent composition in the present disclosure include an external treatment agent (surface-treating agent) or internal treatment agent, repellent (water-repellent agent, oil-repellent agent or water- and oil-repellent agent, or the like, particularly water-repellent agent), soil resistant agent, soil release agent, release agent, and mold release agent (external mold release agent or internal mold release agent).

### <Production method of treated product>

The method for producing a treated product in the present disclosure includes the step of treating a substrate with the water-repellent composition.

### [Treated product]

Examples of the substrate treated with the water-repellent composition of the present disclosure include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof. As an example of a substrate to be treated with the water-repellent composition, a woven or knitted fabric will be described in detail.

### (Woven or knitted fabric)

### • Production method of woven or knitted fabric

A woven or knitted fabric can be obtained by weaving or knitting the aforementioned combined filament-interlaced yarns to obtain a greige fabric and then subjecting it to post-processing and water-repellent treatment. The weaving or knitting may be carried out by using a known weaving machine or knitting machine, and the preparation process prior to weaving or knitting can also be carried out by using known equipment.

In the post-processing, the greige fabric first undergoes scouring and relaxing. The scouring and relaxing may be carried out continuously or in a batch manner at a temperature of 80 to 130°C. The scouring and relaxing are usually preferably carried out in a batch manner at 100°C or lower, and in particular, it is preferably carried out by using a high-pressure liquid flow dyeing machine equipped with a jet nozzle.

After the scouring and relaxing, the woven or knitted fabric undergoes presetting. The presetting is usually carried out by dry heat treatment at 170 to 200°C for 30 to 120 seconds by using a pin tenter. After the presetting, the fabric is dyed according to an ordinary method, followed by final setting if necessary.

After the post-processing, the woven or knitted fabric may undergo water-repellent treatment. In the water-repellent treatment, first, an aqueous solution containing a water-repellent agent (the aqueous solution may be the water-repellent composition in the present disclosure) is prepared. Then, by a padding method, spray method, kiss roll coater method, slit coater method, or the like, the aforementioned aqueous solution can be applied to the woven or knitted fabric after the above post-processing, and the resultant may undergo dry heat treatment at 105 to 190°C for 30 to 150 seconds. The above aqueous solution may contain a crosslinking agent, softener, antistatic agent, and the others, as necessary. After the water-repellent treatment, the woven or knitted fabric may be subjected to calendering processing in order to further improve its water-repellent performance.

The woven or knitted fabrics are suitably used for apparel applications, particularly for uniform wear applications, ladies' wear applications, and sportswear applications.

### • Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used for apparel applications and the like, it is arranged so that the woven or knitted fabric side is exposed to rainwater and the like.

### • Moisture permeable and waterproof layer

The moisture permeable and waterproof layer is a layer that covers one side of the woven or knitted fabric and is formed by a resin having a waterproof property and moisture permeability.

The moisture permeable and waterproof layer may be formed by directly coating a woven or knitted fabric with a resin (resin for forming the moisture permeable and waterproof layer) or the layer may be stacked above one side of the woven or knitted fabric via the adhesive layer described below. In the present disclosure, combined filament-interlaced yarns with fine protrusions due to loops or slacks are used for the woven or knitted fabric. Therefore, the protrusions are firmly entangled with the adhesive layer or the moisture permeable and waterproof layer to exhibit an anchoring effect, so that it is very difficult for the woven or knitted fabric and the moisture permeable and waterproof layer to peel from each other. In a case in which an ordinary woven or knitted fabric (a woven or knitted fabric in which the aforementioned protrusions are not sufficiently retained on its surface) is used, the anchoring effect may not be sufficiently exhibited, whereby the woven or knitted fabric and the moisture permeable and waterproof layer easily peel from each other.

A resin for forming the moisture permeable and waterproof layer is not limited, and preferably contains a polyurethane resin as the main component, and for example, the resin preferably contains a polyurethane resin in an amount of 80% by weight or more. The polyurethane resin is generally suitable for forming a resin layer with moisture permeability and a waterproof property. Among them, a microporous type of polyurethane is preferred, taking moisture permeability into consideration. However, in a case in which the resin is likely to be exposed to rainfall for a long period of time or is expected to be used repeatedly via laundry or the like, a non-porous type of moisture permeable urethane may be used instead of the microporous type.

As the polyurethane resin, a conventionally known polyurethane resin obtained by reacting a polyisocyanate component with a polyol component can be employed.

The moisture permeable and waterproof layer may have a microporous structure or a non-porous structure. In the case of the microporous structure, inorganic fine powder can be contained in the moisture permeable and waterproof layer in order to secure desired moisture permeability.

Examples of the inorganic fine powder include fine powder made of, for example, silicon dioxide, aluminum dioxide, or titanium dioxide. The average primary particle size of the inorganic fine powder is preferably about 7 to 40 nm. The content of inorganic fine powder is preferably 3 to 50% by weight relative to the total amount of moisture permeable and waterproof layer, and it is preferably 5 to 50% by weight.

The thickness of the moisture permeable and waterproof layer is preferably 5 µm or thicker and more preferably 10 to 30 um. Within the above range of thickness, a waterproof property and moisture permeability are well-balanced, which is advantageous in terms of texture and tear strength.

### • Adhesive layer

The stacked fabric preferably includes an adhesive layer. In other words, the woven or knitted fabric and the moisture permeable and waterproof layer are preferably stacked via an adhesive layer. The reason therefor will be described below. In the present disclosure, the woven or knitted fabric is employed that has on its surface fine protrusions due to loops or slacks, as described above. Therefore, the protrusions are firmly entangled with the adhesive layer to exhibit an anchoring effect, so that it is very difficult for the woven or knitted fabric and the moisture permeable and waterproof layer to peel from each other.

Moreover, when the moisture permeable and waterproof layer is directly stacked on the aforementioned woven or knitted fabric, for example, by a coating method, the protrusions on the surface of the woven or knitted fabric may penetrate thorough the moisture permeable and waterproof layer, which results in formation of pinholes and may thus cause poor water resistance and strength. There also arises a concern that coating will not be carried out in uniform manner, resulting in uneven thickness in the moisture permeable and waterproof layer. In order to prevent this, when a surface of the woven or knitted fabric is smoothed by a calendering processing, for example, water-repellency may decrease due to reduction in the protrusions or air retention layer. Therefore, in the present disclosure, the woven or knitted fabric and the moisture permeable and waterproof layer are preferably stacked via an adhesive layer.

A type of the adhesive for forming the adhesive layer is not limited, but is preferably an adhesive excellent in miscibility with the moisture permeable and waterproof layer. For example, when a resin including a polyurethane resin as the main component is selected as a resin for forming the moisture permeable and waterproof layer, an adhesive layer composed of a polyurethane-based adhesive is preferably employed. The polyurethane-based adhesive used may be any one of etheric, esteric, polycarbonate-based adhesives, and the others; however, in view of imparting excellent moisture permeability, the etheric adhesive is preferably included.

The adhesive layer may be formed on the entire surface of one side of the woven or knitted fabric, or may be formed in pattern in view of moisture permeability, texture, or the like. The patterned form is not limited, and may be dotted, linear, lattice, checkered, tortoiseshell patterns, and the others, and any of these patterns is preferably uniformly distributed throughout the entire surface.

The thickness of the adhesive layer is preferably about 10 to 100 um and more preferably 20 to 80 um. The thickness less than 10 µm makes it difficult to provide a durable stacked fabric even when the area occupied by the adhesive is large, and the thickness exceeding 100 µm increases a production cost and also leads to a tendency that further adhesiveness cannot be expected, both of which are undesirable.

### • Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength. Moreover, stacking the textile fabric for lining can inhibit elongation of the entire stacked fabric. Therefore, the protrusions can be inhibited from their reduction resulting from a pull on the protrusions of the combined filament composite yarns by elongation of the woven or knitted fabric due to a finishing process after stacking, tension upon wearing, or the like, and the aforementioned water-repellency can be highly maintained. Moreover, stacking the textile fabric for lining further improves the water-repellency.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer. In particular, a tricot knitted fabric, elasticity of which is inhibited compared to knitted fabrics having other structures, is preferred, because their stitch voids become not too large, allowing the water-repellency to be exhibited more effectively. The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is as follows: a problem with polyester fibers and the like, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

### • Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, further preferably 16,000 mm or more, and particularly preferably 20,000 mm or more, as measured according to the water resistance test specified in the A method (low water pressure method) in JIS L 1092: 2009. The upper limit value of the water level is not limited, and is, for example, 50,000 mm or 25,000 mm.

The stacked fabric has excellent moisture permeability. As for a suitable example of the moisture permeability of the stacked fabric of the present disclosure, the moisture permeability is, for example, 10,000 g/m²·24h or more, preferably 15,000 g/m²·24h or more, and further preferably 20,000 g/m²·24h or more, as measured according to the B-1 method (potassium acetate method) in JIS L 1099: 2012. The upper limit value of the moisture permeability is not limited, and is, for example, 40,000 g/m²·24h or 35,000 g/m²·24h.

The stacked fabric inhibits interlayer peeling between the woven or knitted fabric and the moisture permeable and waterproof layer. As for a suitable example of the peel strength between the woven or knitted fabric and the moisture permeable and waterproof layer in the stacked fabric of the present disclosure, the peel strength is, for example, 5 N/2.54 cm or more, preferably 5 to 50 N/2.54 cm, further preferably 6 to 30 N/2.54 cm, and particularly preferably 9 to 25 N/2.54 cm, as measured according to the method in JIS L 1089. In order to fall the peel strength in the above range, a woven or knitted fabric without calendering processing may be employed, or an adhesive layer may be provided, for example.

### • Production method of stacked fabric

Methods for producing a stacked fabric are not limited, but include for example, the first production method and second production method described below.

The first production method: it comprises the step of applying a resin for the moisture permeable and waterproof layer to the surface of a woven or knitted fabric to form the moisture permeable and waterproof layer.

The second production method: it comprises the step of forming an adhesive layer on a woven or knitted fabric or a moisture permeable and waterproof layer, and the step of bonding the woven or knitted fabric and the moisture permeable and waterproof layer via an adhesive layer.

The woven or knitted fabric used for stacked fabrics (i.e., the woven or knitted fabrics of the present disclosure described above) preferably retain protrusions on the fabric surface as much as possible. For example, when a woven or knitted fabric undergoes calendering processing in order to facilitate coating processing or the like, fine protrusions of combined filament-interlaced yarns may becrushed to a flat surface, whereby a specific water drop rolling angle may not be achieved. Furthermore, as a result of the calendering processing, the above-described air retention layer cannot be sufficiently retained, whereby the desired water-repellency may not be attained. Therefore, conditions for calendering processing are preferably sufficiently taken into account, and for example, when a woven or knitted fabric is subjected to calendering processing, ordinary conditions (for example, a temperature of 130°C or higher, and a linear pressure of 200 to 20,000 N/cm) may be employed so that the protrusions of the combined filament-interlaced yarns are not reduced too much. Calendering processing may also be carried out without heating.

In the first production method, examples of methods for applying a resin for the moisture permeable and waterproof layer to the surface of the woven or knitted fabric include a coating method. In the coating method, a knife coater or comma coater can be used. In view of allowing a moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving use of a resin solution or a method involving hot melt can be employed to form the adhesive layer. First, a clearance is created on the surface of a release material (release paper, release fabric, or release film, and the like) ; a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is heat treated to completely react to thereby obtain a film. The release material can be appropriately removed after having bonded or aging.

An adhesive layer is then formed on the woven or knitted fabric or the moisture permeable and waterproof layer. For example, in the method involving use of a resin solution, a polyurethane resin solution may be applied to the entire surface of the layer or applied to the surface in a pattern, and the polyurethane resin solution may be a two-pack curable type and have an adjusted viscosity within a range of 500 to 5000 mPa-s. Thereafter, the applied solution is then dried to form the adhesive layer, the woven or knitted fabric and the moisture permeable and waterproof layer are bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80 to 150°C are more suitably used in practice. In this case, the hot melt resin is first melted while taking into consideration the melting point of the resin, its viscosity when melted and the others. The surface of the woven or knitted fabric or the moisture permeable and waterproof layer is then coated with the molten resin, and the coated fabric or layer is allowed to mature while cooled at ordinary temperature to form an adhesive layer. Thereafter, the woven or knitted fabric and the moisture permeable and waterproof layer are bonded to each other via the adhesive layer, and undergo compression bonding, whereby the second production method can be implemented.

Among these production methods, the second production method is preferably employed. In a case in which the moisture permeable and waterproof layer is stacked using the coating method, there is a concern that the moisture permeable and waterproof layer may create pinholes due to fine protrusions on the surface of the woven or knitted fabric, which tends to reduce water resistance pressure. Moreover, when the woven or knitted fabric is subjected to calendering processing in an attempt to form a uniform moisture permeable and waterproof layer, there is a concern that desired water-repellency may not be achieved due to reduction of the protrusions or air retention layer, and calendering conditions are thus required to be examined separately, which may result in that the process itself may become complicated.

Thereafter, the textile fabric for lining can be stacked on the moisture permeable and waterproof layer using a known and appropriate method.

### • Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, outdoor products, and the like, all of which are used outdoors.

### [Treatment method]

The water-repellent composition of the present disclosure can be applied as a treatment agent (particularly a surface-treating agent) to a substrate by conventionally known methods. A method for applying the water-repellent composition in the present disclosure may include dispersing the water-repellent composition in an organic solvent or water to dilute it therewith, if necessary, and allowing the resultant to adhere to the surface of the substrate by any known methods such as dip coating, spray coating, or foam coating, and then drying it. After drying, a textile product is obtained with a solid component in the water-repellent composition adhered. If necessary, a suitable crosslinking agent may be applied in combination with the water-repellent composition, followed by curing. Furthermore, the water-repellent composition of the present disclosure may be used in combination with various additives such as water- and/or oil-repellent agents, anti-slip agents, antistatic agents, texture modifiers, softening agents, antibacterial agents, flame retarders, coating material fixing agents, wrinkle-resistant agents, drying rate adjusters, crosslinking agents, film formation agents, compatibilizing agents, antifreeze agents, viscosity adjusters, ultraviolet absorbers, antioxidants, pH adjusters, insect repellents, and antifoaming agents. Examples of the various additives may be the same as those described in "Other components" for the water-repellent composition hereinabove. The concentration of the hydrocarbon-based water-repellent resin in the treatment agent to be brought into contact with a substrate may be appropriately changed according to applications, but may be 0.01 to 10% by weight, for example, 0.05 to 5% by weight.

### [Textile product]

A textile product as a substrate may be any of various products, and examples thereof include fabric products and paper products.

Examples of the fabric product include: flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. Fabric products include woven fabrics, knitted fabrics, and non-woven fabrics, fabrics in clothing form and carpets. Fibers, yarns and intermediate textile products (for example, slivers or coarse yarns) before being formed into fabrics may also undergo treatments.

Examples of the paper product include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of the paper product include food packaging paper, base paper for gypsum board, coated base paper, medium quality paper, general liner and core, neutral pure white roll paper, neutral liner, rustproof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The water-repellent composition can be applied to the textile products by any of the methods known for treating textile products (for example, fabrics) with liquids. The textile product may be immersed in a water-repellent composition, or the solution may be adhered to or sprayed on the textile product. The treated textile product is dried and subjected to curing, preferably by heating, in order to develop water- and oil-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the polymer may be applied to the textile product by a cleaning method, for example, in laundry application or dry cleaning methods.

The textile products to be treated may be fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The water-repellent composition of the present disclosure is particularly effective in rendering textile products (for example, synthetic fibers) water-repellent.

Fibers constituting the textile product may be natural, synthetic, semi-synthetic, regenerated or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying the water-repellent composition to a substrate by dipping, spraying, coating, etc. The treatment allows the polymer as an active ingredient of the water-repellent composition to penetrate inside of the substrate and/or to adhere to a front side of the substrate.

### [Pretreatment of textile product]

The textile product may be pretreated prior to treatment with the water-repellent composition of the present disclosure. When a pretreated textile product is treated with the water-repellent composition, the textile product after the treatment with the water-repellent composition has excellent fastness.

Examples of pretreatment of textile products include cationization treatments by reaction with reactive quaternary ammonium salts or the like, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the textile product is not limited, and the textile product can be pretreated by any of conventionally known methods. The method for pretreatment may include dispersing a pretreatment liquid in an organic solvent or water to dilute it therewith, as necessary, and allowing the diluted pretreatment liquid to adhere to the surface of the textile product by any known methods such as dip coating, spray coating, foam coating, and the like, and then drying the resultant. The pH, temperature, etc. of the pretreatment liquid may be adjusted according to an extent of treatment desired. As an example of the method for pretreating a textile product, a method for pretreating the textile product with a hydrocarbon-based water-repellent agent will be described in detail.

The method for pretreating a textile product may include the step of applying, to a fiber, at least one functional group (hereinafter may be referred to as "specific functional group") selected from a monovalent group represented by -SO₃M¹ wherein M¹ represents a monovalent cation, a monovalent group represented by - COOM² wherein M² represents a monovalent cation, and a monovalent group represented by -O-P(O)(OX¹)(OX²) wherein X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Raw materials of the fiber material are not limited, and examples thereof include natural fibers such as cotton, hemp, silk, and wool, semi-synthetic fibers such as rayon and acetate, synthetic fibers such as polyamides (nylon and the like), polyester, polyurethane, polypropylene, and composite fibers and blended fibers thereof. The fiber material may be in any form of fibers (tows, slivers, and the like), yarns, knitted fabrics (including interknitted fabrics), woven fabrics (including interwoven fabrics), nonwoven fabrics, papers, and the like.

In the present embodiment, in view of favorable water-repellency of the textile products to be obtained, fiber materials containing a polyamide and polyester as a raw material are preferably used, and in particular, nylons such as nylon 6 and nylon 6,6, polyesters such as polyethylene terephthalate (PET), polytrimethyl terephthalate, and polylactic acid, and mixed fibers containing these materials are preferably used.

A Phenolic polymer can be used as the compound having -SO₃M¹ described above. Examples of such a phenolic polymer include those containing at least one compound represented by the following general formula: 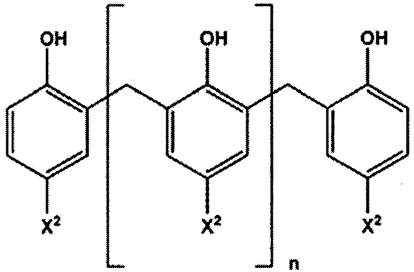
wherein in formula (2), X² represents -SO₃M³, wherein M³ represents a monovalent cation, or a group represented by the following general formula, and n is an integer of 20 to 3,000; 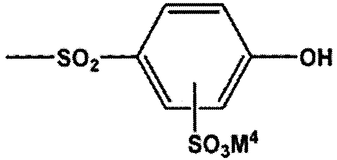
wherein M⁴ represents a monovalent cation.

Examples of M³ include H, K, Na or an ammonium ion that may have a substituent.

Examples of M⁴ include H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

The polycarboxylic acid-based polymer used can be, for example, a polymer synthesized by using acrylic acid, methacrylic acid, maleic acid, and the like as monomers by a conventionally known radical polymerization method, or a commercially available polymer.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. In this case, alcohols such as methanol, ethanol, and isopropyl alcohol, or aqueous solvents such as acetone may be added to the aqueous solution of the above monomer and/or salt thereof. Examples of the radical polymerization initiator include persulfates such as potassium persulfate, sodium persulfate, and ammonium persulfate; redox-based polymerization initiators such as a combination of a persulfate with sodium bisulfite; hydrogen peroxide, and water-soluble azo-based polymerization initiators. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl monomers such as ethylene, vinyl chloride, and vinyl acetate, acrylamide, acrylates, and methacrylates. The acrylates and methacrylates preferably have a hydrocarbon group having 1 to 3 carbon atoms that may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used singly or in combination of two or more thereof.

The carboxyl group in the polycarboxylic acid-based polymer may be free or neutralized with an alkali metal, an amine-based compound, or the others. Examples of the alkali metal include sodium, potassium, and lithium, and examples of the amine-based compound include ammonia, monoethanolamine, diethanolamine, and triethanolamine.

A weight average molecular weight of the polycarboxylic acid-based polymer is preferably 1,000 to 20,000 and more preferably 3,000 to 15,000 in view of favorable water-repellency of the textile product to be obtained.

Commercially available products of the polycarboxylic acid-based polymer can be used, including "NEOCRYSTAL 770" (trade name, manufactured by NICCA CHEMICAL CO., LTD.) and "CELLOPOL PC-300" (trade name, manufactured by Sanyo Chemical Industries, Ltd.).

Examples of the compound having -O-P(O)(OX¹)(OX²) as described above include phosphate ester compounds represented by the following general formula: 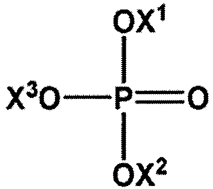 wherein, X¹ or X² is the same as defined above, and X³ represents an alkyl group having 1 to 22 carbon atoms.

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, commercially available products such as PHOSPHANOL ML-200 (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by JIKKYO SHUPPAN CO., LTD., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The Drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which the textile material is those to be dyed, treatment with the pretreatment liquid may be carried out either before dyeing or in the same bath as in dyeing. However, in a case in which reduction soaping is carried out, there is a risk that the compounds having the aforementioned specific functional groups (for example, phenolic polymer compounds and the like) adsorbed may drop off in the course, and therefore, the treatment with the pretreatment liquid is preferably carried out following the reduction soaping after the dyeing.

The treatment temperature in the dip treatment can be 60 to 130°C. The treatment time can be 5 to 60 minutes.

The step of introducing the functional group by the pretreatment liquid is preferably treatment such that the amount of the adhering compound having the aforementioned specific functional group is 1.0 to 7.0 parts by weight, per 100 parts by weight of the fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The functional group-containing fibers to be obtained are preferably sufficiently dried before contacting them with the hydrocarbon-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of - 100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

### Examples

Hereinbelow, Examples of the present disclosure will be specifically illustrated; however, Examples do not restrict the present disclosure.

The test procedures are as follows.

### [Particle Size of Hydrophilic Particle]

The particle size of a hydrophilic particle was measured as a primary particle size by the following method. A dispersion containing hydrophilic particles was sprayed onto a carbon support film, the evaporated sample is observed with a transmission electron microscope, particle sizes of all the particles present within the field of view were measured, and again measured by moving the field of view repeatedly to measure particle sizes at 10 or more points, and the average value thereof was taken as an average primary particle size.

### [Turbidity]

The turbidity of a water dispersion prepared by dispersing a hydrophilic particle in water at a concentration of 10 g/l and adjusting a pH to 7, was calculated by using an integrating sphere type turbidimeter PT200 manufactured by Nitto Seiko Analytech, Co., Ltd., obtaining a calibration curve (in a range of 0 to 1,000 ppm) using turbidity of kaolin (pigment) as a standard sample based on Testing methods for water, JIS K0101, and making calculation based on the calibration curve.

### [Zeta Potential]

Zeta potential of a water dispersion of a hydrophilic particle dispersed in water at a concentration of 10 g/l, which was adjusted to a pH of 7 at 25°C, was measured using a zeta potential meter (ELSZ-2000 manufactured by Otsuka Electronics Co., Ltd.).

### [Water-repellency test]

The treated test fabric was evaluated for water-repellency by the spray method according to the JIS-L-1092 (AATCC-22).

The water-repellency was evaluated according to the following criteria. The higher the score, the more favorable the water-repellency.

100: No wet or water droplets adhered were observed on the front surface.
90: No wet but small water droplets adhered were observed on the front surface.
80: Wet in the form of separate small water droplets was observed on the front surface.
70: Wet was observed on half of the front surface and the permeation of separate small wet into the fabric, was observed.
50: Wet was observed on the entire front surface.
0: Wet was observed on the entire front surface and the entire back surface.

### [Slipperiness]

The test fabric was tested for a warp sliding at a load of 117.2 N (12 kgw) in accordance with JIS L 1096 - 99.8.21.1, the Seam sliding method B, and a seam sliding (mm) was measured. The smaller the seam sliding value, the better the slip resistance.

### [Storage Stability]

After having left a water-repellent composition test liquid with a solid content concentration adjusted to 30% by weight at 50°C for one week, the condition of the liquid is visually observed and evaluated according to the following criteria.
∘: No change in appearance
Δ: Precipitate in the upper layer
X: Sediment

### [Preparation of Raw Material]

### (Production Example of Acrylic Polymer-Containing Water-Dispersion)

### Production Example 1

A 500 ml plastic container was charged with 30 g of water-soluble glycol-based solvent as an organic solvent, 120 g of pure water as a liquid medium, 40 g of stearyl acrylate as a long chain aliphatic hydrocarbon group-containing (meth)acrylate, 2 g of sorbitan fatty acid ester as a surfactant, 0.1 g of acetic acid as an organic acid, 2 g of cationic emulsifier, and 6 g of polyoxyethylene alkyl ether, the mixture was heated to 80°C, stirred with a homomixer at 2,000 rpm for 1 minute, and then emulsified and dispersed with ultrasonic waves for 15 minutes.

Next, this mixture was transferred to a 500 ml autoclave, and after nitrogen substitution, 0.2 g of lauryl mercaptan as a chain transfer agent and 20 g of vinyl chloride as a copolymerizable monomer were charged. To the mixture was further added 1 g of an azo group-containing water-soluble initiator as a polymerization initiator, and was raised to a temperature of 60°C and reacted for 4 hours to obtain a water dispersion of an acrylic polymer (hydrocarbon-based water-repellent resin). This dispersion was further diluted with pure water to prepare a water dispersion of a hydrocarbon-based water-repellent resin with a solid content concentration of 30% (in detail, a water dispersion containing the hydrocarbon-based water-repellent resin, the surfactant and the liquid medium).

### Production Example 2 to Production Example 4

Each water dispersion containing an acrylic polymer, a surfactant, and a liquid medium were prepared in the same manner as in the Production Example 1, except that the compounding formulation was changed according to Table 1.

**[Table 1]**

| | Production Example 1 | Production Example 2 | Production Example 3 | Production Example 4 |
|---|---|---|---|---|
| Stearyl acrylate | 40 | 60 | 20 | 40 |
| Stearyl group-containing amide acrylate | | | 20 | |
| Vinyl chloride | 20 | | 20 | 20 |
| Azo group-containing water-soluble initiator | 1 | 1 | 1 | 1 |
| Lauryl mercaptan | 0.2 | 0.2 | 0.2 | 0.2 |
| Water-soluble glycol-based solvent | 30 | 30 | 30 | 30 |
| Cationic emulsifier | 2 | 2 | 2 | 2 |
| Reactive emulsifier | | | | 6 |
| Sorbitan fatty acid ester | 2 | 2 | 2 | 2 |
| Polyoxyethylene alkyl ether | 6 | 6 | 6 | |
| Acetic acid | 0.1 | 0.1 | 0.1 | 0.1 |
| Pure water | 120 | 120 | 120 | 120 |

The figure in the table denotes the amount charged (g)

### (Dendrimer-Containing Water Dispersion)

As a water dispersion containing a dendrimer-based water-repellent resin, ECO PLUS (manufactured by Rudolph GmbH), was used.

### (Production Example of Polyurethane-Containing Water Dispersion)

### Production Example 5

### 1. Synthesis of Aliphatic Polyisocyanate Derivative

In a reactor equipped with a thermometer, stirrer, nitrogen inlet pipe and cooling pipe, under a nitrogen atmosphere, 500 parts by mass of 1,6-hexamethylene diisocyanate (HDI, trade name, Takenate 700, manufactured by Mitsui Chemicals, Inc), 0.25 parts by mass of 2,6-di(tert-butyl)-4-methylphenol (another name: dibutylhydroxytoluene, BHT, a hindered phenolic antioxidant), 0.25 parts by mass of tetraphenyl•dipropylene glycol•diphosphite (organic phosphorous acid ester, a promotor), were mixed, to this mixed liquid was then added 10.7 parts by mass of 1,3-butanediol, and nitrogen was introduced into the liquid phase for 1 hour. Thereafter, the mixed liquid was raised to a temperature of 80°C, reacted for 3 hours, then lowered to a temperature of 60°C. To the mixed liquid was then added 0.2 parts by mass of trimethyl-N-2-hydroxypropylammonium•2-ethylhexanoate as an isocyanuration catalyst, and was reacted for 1.5 hours. Thereafter, 0.04 parts by mass of o-toluenesulfonamide was added per 100 parts by mass of HDI. Then, this reaction mixed liquid was passed through a thin film distillation apparatus (temperature 150°C, degree of vacuum 93.3 Pa) and distilled until the amount of residual HDI monomer reached 0.5% or less to obtain an aliphatic polyisocyanate derivative (isocyanurate derivative of hexamethylene diisocyanate). The isocyanate group content of the obtained aliphatic polyisocyanate derivative was 20.9%, and the average number of isocyanate functional groups was 3.0.

### 2. Production of Hydrocarbon-Based Polyurethane

In a reactor equipped with a stirrer, thermometer, cooling pipe, and nitrogen gas inlet pipe, 100.20 g of the aliphatic polyisocyanate derivative and 67.60 g of KALCOL 8098 (stearyl alcohol, manufactured by Kao Corporation) as a long chain active hydrogen compound and 22.30 g of oleic alcohol were mixed, and the mixture was reacted under a nitrogen atmosphere at 110°C for 4 hours until the concentration of isocyanate groups reached 3.67%.

Next, the reaction liquid was cooled to 80°C, 9.90g of N-methyldiethanolamine as a cationic active hydrogen compound was added thereto, and reacted at 80°C for 1 hour.

Next, to the reaction liquid was added 50.00 g of methyl ethyl ketone as a solvent, and reacted at 80°C until disappearance of the isocyanate group was confirmed in an infrared absorption spectrum.

Next, to the reaction liquid was added 57.69 g of methyl ethyl ketone, raised to a temperature of 80°C, and mixed until the reaction liquid was completely dissolved, and then cooled to 75°C.

Thereafter, to the reaction liquid was added 18.96 g of acetic acid as an acid compound, and neutralized.

Next, while being kept at 75°C, to the reaction liquid was gradually added 800.0 g of ion exchanged water heated to 70°C, and emulsified (internal emulsification).

Next, until the solid content concentration became 20% by weight or more, the solvent was removed in an evaporator under reduced pressure at a water bath temperature of 60°C.

Next, with ion exchanged water, the solid content concentration excluding the acid compound (acetic acid) was adjusted to 20% by weight to obtain a water dispersion containing a polyurethane.

### Production Example 6

A 500 mL four-necked flask equipped with a stirring bar, thermometer, and reflux pipe was charged with 116 g of sorbitan tristearate and 150 g of 4-methyl-2-pentanone (MIBK). Next, in order to remove excess water vapor from the mixed liquid, it was stirred while being kept at the temperature thereof of 70°C, refluxed for 1 hour, and then cooled to 50°C. While kept stirring, the mixed liquid was added dropwise with 30 g of Desmodur N-100 (biuret derivative of hexamethylene diisocyanate, manufactured by Covestro AG) by using a dropping funnel. After completion of the dropwise addition, to the mixed liquid was added one drop of dibutyltin dilaurate as a catalyst, and was reacted at 80°C for 1 hour. Next, to the mixed liquid was added 25 g of sorbitan monostearate, and was further reacted at 80°C for 4 hours.

Next, after having been cooled to 60°C, the reaction liquid was collected and was slowly mixed with water at 60°C, containing an arbitrary amount of a cationic emulsifier and a polyoxyethylene alkyl ether. The mixed liquid was stirred at 6,000 rpm for 1 minute using a homomixer, and was then emulsified and dispersed using ultrasonic waves for 15 minutes. Thereafter, the solvent (MIBK) was removed by a reduced pressure operation, and then pure water was added to adjust the concentration of the mixed liquid to obtain a water dispersion containing a polyurethane with a solid content concentration of 20%.

### Production Example 7

A 500 mL four-necked flask equipped with a stirring bar, thermometer, and reflux pipe was charged with 150 g of methyl ethyl ketone (MEK) and 51 g of stearyl alcohol. Next, in order to remove excess water vapor from the mixed liquid, it was stirred while being kept at the temperature thereof of 70°C, refluxed for 1 hour, and then cooled to 50°C. To the mixed liquid was then added 30 g of Desmodur N3200A (biuret derivative of hexamethylene diisocyanate, manufactured by Covestro AG) and was further reacted at 80°C for 4 hour.

Next, after having been cooled to 60°C, the reaction liquid was collected, and slowly mixed with water at 60°C, containing an arbitrary amount of a polyoxyethylene alkyl ether. The mixed liquid was stirred at 6,000 rpm for 1 minute by using a homomixer, and was then emulsified and dispersed using ultrasonic waves for 15 minutes.

Thereafter, the solvent (MEK) was removed by a reduced pressure operation, and then pure water was added to adjust the concentration of the mixed liquid to obtain a water dispersion containing a polyurethane with a solid content concentration of 20%.

### (Production Example of Silicone-Containing Water Dispersion)

### Production Example 8

A 200 mL four-necked flask equipped with a stirring bar, thermometer, and reflux pipe was charged with 12 g of methyl hydrogen silicone oil (the SiH:SiCH₃ molar ratio measured by 1H NMR = 50:50) and 0.02 g of platinum catalyst. Next, a dropping funnel was charged with 36 g of 1-hexacosene and it was added dropwise from the dropping funnel while being kept at the temperature at 70°C. After completion of the dropwise addition, the reaction was further carried out at 70°C for 3 hours. Infrared spectroscopy (IR) confirmed disappearance of a SiH peak and 47 g of a solid silicone polymer was obtained.

Next, a 250 ml glass container was charged with 28 g of silicone polymer, 5.6 g of water-soluble glycol-based solvent, 60 g of pure water, 1.7 g of sorbitan fatty acid ester, 0.7 g of polyoxyethylene alkyl ether, and 0.6 g of cationic emulsifier, the mixture was heated to 75°C, stirred for 1 minute at 2,000 rpm using a homomixer, and then emulsified and dispersed using ultrasonic waves for 10 minutes to obtain a water dispersion of a silicone polymer. Thereafter, pure water was added to prepare a water dispersion of a silicone polymer with a solid content concentration of 30% by weight.

### (Production Example of Wax-Containing Water Dispersion)

### Production Example 9

A pressurable reaction container was charged with 150 g of paraffin wax (melting point 75°C), 350 g of pure water, 4.5 g of polyoxyethylene alkyl ether, and 3 g of sorbitan fatty acid ester and sealed, the mixture was raised to a temperature of 110 to 120°C while stirred, and then was subjected to high-pressure emulsification under high pressure for 30 minutes to prepare a water dispersion of wax. Thereafter, pure water was added to prepare a water dispersion of wax with the solid content of 30% by weight.

### Production Example 10

A reaction container was charged with 150 g of polypropylene oxide wax having a melting point of 150°C, an acid value of 44 mg KOH/g, and a density of 0.93, 325 g of ion exchanged water, 25 g of surfactant with an HLB of 15, and 5 g of 48% potassium hydroxide aqueous solution, and sealed, the mixture was raised to a temperature of 160°C while stirred, and then was subjected to high-pressure emulsification under high pressure for 1 hour, followed by cooling to 90°C to obtain a water dispersion of polypropylene wax. Thereafter, pure water was added to prepare a water dispersion of polypropylene wax with the solid content of 30% by weight.

### [Examples 1 to 17 and Comparative Examples 1 to 10]

To the aforementioned water dispersion and the hydrophilic particle shown in Table 2 was added and mixed water to obtain each water dispersion with a solid content concentration of 30% so that a composition weight ratio matched with that shown in Table 3. This water dispersion was diluted with tap water to prepare 1000 g of a test liquid with a solid content concentration of 1.0% by weight. Next, test fabrics (polyester fabric and nylon fabric) were impregnated with this test liquid, followed by passed through a mangle, and were passed through a pin tenter at 160°C for 1 minute, dried and cured to carry out the aforementioned test.

**[Table 2]**

| Hydrophilic particle | Average primary particle size (nm) | Zeta potential (mv) (pH 7.0) | Turbidity (ppm) (pH 7.0) |
|---|---|---|---|
| Alumina particle 1 | 15 | +20 | 12 |
| Silica particle 1 | 12 | +40 | 670 |
| Silica particle 2 | 45 | +39 | 270 |
| Silica particle 3 | 110 | +34 | 240 |
| Silica particle 4 | 25 | +45 | 2.0 |

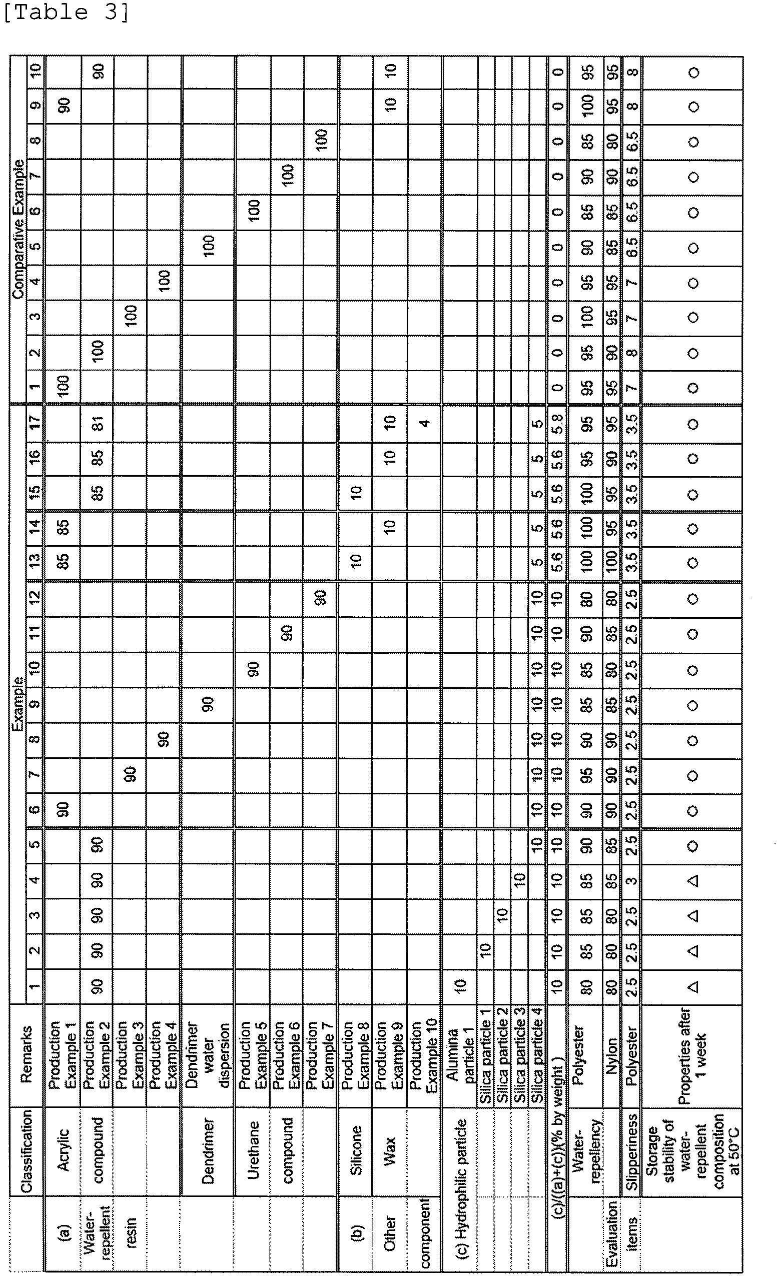

The embodiments have been described above, however, it will be understood that various changes can be made in the forms and details without departing from the gist and scope of the claims.

## Claims

1. A water-repellent composition comprising: a hydrocarbon-based water-repellent resin having a hydrocarbon group having 5 to 40 carbon atoms; and a hydrophilic particle.

2. The water-repellent composition according to claim 1, wherein a water dispersion prepared by dispersing the hydrophilic particle in water at a concentration of 10 g/l and adjusting a pH of the water dispersion to 7 has a turbidity of 20 ppm or less.

3. The water-repellent composition according to claim 1 or 2, comprising at least one selected from the group consisting of an organic acid, a surfactant, and an organic solvent.

4. The water-repellent composition according to any one of claims 1 to 3, wherein a water dispersion prepared by dispersing the hydrophilic particle in water at a concentration of 10 g/l and adjusting a pH of the water dispersion to 7 has a zeta potential of +10 mV or higher.

5. The water-repellent composition according to any one of claims 1 to 4, wherein an amount of the hydrophilic particle is 2% by weight or more and 12% by weight or less based on a total amount of the hydrocarbon-based water-repellent resin and the hydrophilic particle.

6. The water-repellent composition according to any one of claims 1 to 5, wherein the hydrophilic particle has an average primary particle size of less than 40 nm.

7. The water-repellent composition according to any one of claims 1 to 6, wherein the hydrophilic particle is an inorganic particle.

8. The water-repellent composition according to any one of claims 1 to 7, wherein the hydrophilic particle is at least one selected from the group consisting of silica and alumina.

9. The water-repellent composition according to any one of claims 1 to 8, comprising at least one selected from the group consisting of silicone and wax.

10. The water-repellent composition according to any one of claims 1 to 9, wherein the hydrocarbon-based water-repellent resin is a polymer having a repeating unit derived from a monomer represented by the following formula:
CH₂=C(-R¹²)-C(=O)-Y¹¹-(R¹¹)ₖ
wherein R¹¹ is a hydrocarbon group having 5 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having one carbon atom, -C₆H₄-, -O-, - C(=O)-, -S(=O)₂- and -NR'-, wherein R' is a hydrogen atom or a hydrocarbon group having 1 to 4 carbon atoms, and k is 1 to 3.

11. A method for producing the water-repellent composition according to any one of claims 1 to 10, comprising reacting a hydrocarbon-based water-repellent resin raw material in a medium comprising the hydrocarbon-based water-repellent resin raw material and the hydrophilic particle to obtain the hydrocarbon-based water-repellent resin.

12. A method for producing a treated product, comprising treating a substrate with the water-repellent composition according to any one of claims 1 to 10.

13. A textile product to which a solid component in the water-repellent composition according to any one of claims 1 to 10 is adhered.
